# EUROPEAN PATENT APPLICATION

(11) **EP 4 250 078 A1**
(43) Date of publication of application: **27.09.2023**
(21) Application number: 21913835.1
(22) Date of filing: 09.12.2021
(51) Int. Cl.: G06F 3/0481

(54) **WINDOW PAGE INTERACTION METHOD AND APPARATUS, ELECTRONIC DEVICE, AND READABLE STORAGE MEDIUM**

(30) Priority: 30.12.2020 CN 202011644145
(71) Applicant: Huawei Technologies Co., Ltd., Shenzhen, Guangdong 518129 (CN)
(72) Inventor: ZHANG, Xiaobo, Shenzhen, Guangdong 518129 (CN); HUANG, Yu, Shenzhen, Guangdong 518129 (CN); WANG, Xiaokai, Shenzhen, Guangdong 518129 (CN)
(74) Representative: Pfenning, Meinig & Partner mbB
(86) International application number: PCT/CN2021/136899
(87) International publication number: WO 2022/143094

(57) **Abstract**

A window page interaction method and apparatus, an electronic device, and a readable storage medium are applicable to the field of device interaction technologies. The method includes: determining an operation type of an interaction operation in response to the interaction operation initiated by a user in a target window, where the target window includes at least one operable control (S601); and identifying the operable control as an operation object of the interaction operation and controlling the operable control based on the interaction operation if the operation type is a first operation type, where the first operation type is an operation type associated with the operable control (S602); or identifying the target window as an operation object of the interaction operation and controlling the target window based on the interaction operation if the operation type is a second operation type (S603). The foregoing technical solution can resolve a problem that an operation object of an interaction operation cannot be determined when a window page includes an operable control, resulting in low response accuracy in an existing window page interaction technology.

## Description

This application claims priority to Chinese Patent Application No. 202011644145.7, filed with the China National Intellectual Property Administration on December 30, 2020 and entitled "WINDOW PAGE INTERACTION METHOD AND APPARATUS, ELECTRONIC DEVICE, AND READABLE STORAGE MEDIUM", which is incorporated herein by reference in its entirety.

### TECHNICAL FIELD

This application relates to the field of device interaction technologies, and in particular, to a window page interaction method and apparatus, an electronic device, and a readable storage medium.

### BACKGROUND

With continuous development of electronic device technologies, types and forms of content displayed on an electronic device are gradually enriched. As one of important components of the electronic device that carries the displayed content, a window page of the electronic device is increasingly used widely in the page display field.

To meet a display requirement of an existing electronic device, an operable control may be added to a window page of the electronic device, for example, a list control used for up-down scrolling to switch displayed content, or an album control used for left-right page flipping. However, because the foregoing operable control is attached to the window page for display, when an interaction operation is initiated, the electronic device usually cannot determine whether a target object of the interaction operation is the operable control or the window page. Consequently, accuracy of the interaction operation is reduced, and user use experience is affected.

### SUMMARY

Embodiments of this application provide a window page interaction method and apparatus, an electronic device, and a computer-readable storage medium, to resolve a problem that an operation object of an interaction operation cannot be determined when a window page includes an operable control, resulting in low response accuracy in an existing window page interaction technology.

According to a first aspect, an embodiment of this application provides a window page interaction method, including:
determining an operation type of an interaction operation in response to the interaction operation initiated by a user in a target window, where the target window includes at least one operable control; and
identifying the operable control as an operation object of the interaction operation and controlling the operable control based on the interaction operation if the operation type is a first operation type, where the first operation type is an operation type associated with the operable control; or
identifying the target window as an operation object of the interaction operation and controlling the target window based on the interaction operation if the operation type is a second operation type.

Implementation of this embodiment of this application brings the following beneficial effects: The operation type of the interaction operation is identified when an electronic device receives the interaction operation initiated by the user, and the operation object corresponding to the interaction operation is determined based on the operation type. For example, the operation type of the interaction operation is the first operation type. In this case, it may be determined that the operation object corresponding to the interaction operation is the operable control, and the operable control in the target window is controlled based on the interaction operation, for example, moving in a specified direction or flipping a page. If the operation type of the interaction operation is the second operation type, it may be determined that the operation object corresponding to the interaction operation is the target window, and the target window is controlled based on the interaction operation. Compared with an existing interaction response technology, in this embodiment of this application, it can be distinguished, based on the operation type of the interaction operation, that the operation object is the target window at a bottom layer or the operable control attached to the window. Even if the operable control overlaps a display area of the target window, a corresponding operation object can also be distinguished. In addition, the corresponding operation object is controlled, thereby improving accuracy of the interaction operation and improving user use experience.

In a possible implementation of the first aspect, before the determining an operation type of an interaction operation in response to the interaction operation initiated by a user in a target window, the method further includes:
determining interactive information of the operable control, where the interactive information includes an interactive scope and/or an interactive direction; and
determining, based on the interactive information, the first operation type associated with the operable control.

In a possible implementation of the first aspect, the second operation type is an operation type other than the first operation type.

In a possible implementation of the first aspect, the determining an operation type of an interaction operation in response to the interaction operation initiated by a user in a target window includes:
identifying pressing duration corresponding to the interaction operation; and
determining the operation type of the interaction operation based on the pressing duration.

In a possible implementation of the first aspect, the identifying the target window as an operation object of the interaction operation and controlling the target window based on the interaction operation if the operation type is a second operation type further includes:
setting a window event identifier corresponding to the target window to a preset valid bit value.

In a possible implementation of the first aspect, the determining an operation type of an interaction operation in response to the interaction operation initiated by a user in a target window includes:
obtaining, in response to the interaction operation, the window event identifier corresponding to the target window; and
if the window event identifier is the valid bit value, controlling the target window based on the interaction operation.

In a possible implementation of the first aspect, after the obtaining, in response to the interaction operation, the window event identifier corresponding to the target window, the method further includes:
if the window event identifier is a preset invalid bit value, determining the operation type of the interaction operation.

In a possible implementation of the first aspect, after the identifying the operable control as an operation object of the interaction operation and controlling the operable control based on the interaction operation if the operation type is a first operation type, the method further includes:
setting a control event identifier corresponding to the operable control to a preset first bit value.

In a possible implementation of the first aspect, the identifying the target window as an operation object of the interaction operation and controlling the target window based on the interaction operation if the operation type is a second operation type includes:
determining the control event identifier corresponding to the operable control if the operation type is the second operation type; and
stopping responding to the interaction operation if the control event identifier is the preset first bit value; or
identifying the target window as the operation object of the interaction operation and controlling the target window based on the interaction operation if the control event identifier is a preset second bit value.

According to a second aspect, an embodiment of this application provides a window page interaction apparatus, including:
an operation type determining unit, configured to determine an operation type of an interaction operation in response to the interaction operation initiated by a user in a target window, where the target window includes at least one operable control;
a first operation type response unit, configured to: identify the operable control as an operation object of the interaction operation and control the operable control based on the interaction operation if the operation type is a first operation type, where the first operation type is an operation type associated with the operable control; and
a second operation type response unit, configured to: identify the target window as an operation object of the interaction operation and control the target window based on the interaction operation if the operation type is a second operation type.

In a possible implementation of the second aspect, the window page interaction apparatus further includes:
an interactive information determining unit, configured to determine interactive information of the operable control, where the interactive information includes an interactive scope and/or an interactive direction; and
a first operation type determining unit, configured to determine, based on the interactive information, the first operation type associated with the operable control.

In a possible implementation of the second aspect, the second operation type is an operation type other than the first operation type.

In a possible implementation of the second aspect, the operation type determining unit includes:
a pressing duration obtaining unit, configured to identify pressing duration corresponding to the interaction operation; and
a pressing duration comparison baseline file, configured to determine the operation type of the interaction operation based on the pressing duration.

In a possible implementation of the second aspect, the second operation type response unit further includes:
a window event identifier setting unit, configured to set a window event identifier corresponding to the target window to a preset valid bit value.

In a possible implementation of the second aspect, the operation type determining unit includes:
a window event identifier obtaining unit, configured to obtain, in response to the interaction operation, the window event identifier corresponding to the target window; and
a valid bit value response unit, configured to: if the window event identifier is the valid bit value, control the target window based on the interaction operation.

In a possible implementation of the second aspect, the window page interaction apparatus further includes:
an invalid bit value response unit, configured to: if the window event identifier is a preset invalid bit value, determine the operation type of the interaction operation.

In a possible implementation of the second aspect, the window page interaction apparatus further includes:
a control event identifier setting unit, configured to set a control event identifier corresponding to the operable control to a preset first bit value.

In a possible implementation of the second aspect, the second operation type response unit includes:
a control event identifier identification unit, configured to determine the control event identifier corresponding to the operable control if the operation type is the second operation type;
a first bit value response unit, configured to stop responding to the interaction operation if the control event identifier is the preset first bit value; and
a second bit value response unit, configured to: identify the target window as the operation object of the interaction operation and control the target window based on the interaction operation if the control event identifier is a preset second bit value.

According to a third aspect, an embodiment of this application provides an electronic device, a memory, a processor, and a computer program that is stored in the memory and that is executable on the processor. When executing the computer program, the processor implements the window page interaction method according to the first aspect.

According to a fourth aspect, an embodiment of this application provides a computer-readable storage medium. The computer-readable storage medium stores a computer program. When the computer program is executed by a processor, the window page interaction method according to the first aspect is implemented.

According to a fifth aspect, an embodiment of this application provides a computer program product. When the computer program product runs on an electronic device, the electronic device is enabled to perform the window page interaction method according to the first aspect.

According to a sixth aspect, an embodiment of this application provides a chip system, including a processor. The processor is coupled to a memory, and the processor executes a computer program stored in the memory, to implement the window page interaction method according to the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3(a) and FIG. 3(b) are a schematic diagram of an existing window page;
FIG. 4 is a schematic diagram in which an electronic device receives an interaction operation initiated by a user;
FIG. 5(a) and FIG. 5(b) are a schematic diagram of controlling an operable control in a window page based on a dedicated operation area;
FIG. 6 is an implementation flowchart of a window page interaction method according to an embodiment of this application;
FIG. 7(a) and FIG. 7(b) are a schematic diagram of displaying a multi-window page according to an embodiment of this application;
FIG. 8 shows a display interface for split-screen display according to an embodiment of this application;
FIG. 9(a) and FIG. 9(b) are a schematic diagram of an operable control according to an embodiment of this application;
FIG. 10 is a specific implementation flowchart of a window page interaction method according to another embodiment of this application;
FIG. 11(a) and FIG. 11(b) are a schematic diagram of an interactive scope according to an embodiment of this application;
FIG. 12-1 and FIG. 12-2 are a schematic diagram of an interactive direction according to an embodiment of this application;
FIG. 13 is a specific implementation flowchart of S601 in a window page interaction method according to still another embodiment of this application;
FIG. 14 is a schematic diagram of a sliding operation according to an embodiment of this application;
FIG. 15 is a schematic implementation diagram of determining an operable control according to an embodiment of this application;
FIG. 16 is a schematic diagram of a jitter scope according to an embodiment of this application;
FIG. 17 is a schematic flowchart of a window page according to Embodiment 2 of this application;
FIG. 18 is a schematic diagram of division of an interaction operation according to an embodiment of this application;
FIG. 19 is a schematic flowchart of a window page according to Embodiment 3 of this application;
FIG. 20 is a schematic flowchart of a window page according to Embodiment 4 of this application;
FIG. 21 is a response flowchart of a window page interaction method when a touch debounce condition is not met according to an embodiment of this application;
FIG. 22 is a response flowchart of a window page interaction method after an interaction operation on an operable control is responded to according to an embodiment of this application;
FIG. 23 is a response flowchart of a window page interaction method when a target window is responded to for the first time according to an embodiment of this application;
FIG. 24 is a response flowchart of a window page interaction method after an interaction operation on a target window is responded to according to an embodiment of this application;
FIG. 25 is a block diagram of a structure of a page display apparatus according to an embodiment of this application; and
FIG. 26 is a block diagram of a structure of an electronic device according to an embodiment of this application.

### DESCRIPTION OF EMBODIMENTS

In the following descriptions, for illustration instead of limitation, specific details such as a particular system structure and a technology are provided to make a thorough understanding of embodiments of this application. However, persons skilled in the art should know that this application may also be implemented in other embodiments without these specific details. In other cases, detailed descriptions of well-known systems, apparatuses, circuits, and methods are omitted, so that this application is described without being obscured by unnecessary details.

It should be understood that, when used in this specification and the appended claims of this application, the term "include" indicates presence of the described features, entireties, steps, operations, elements, and/or components, but does not exclude presence or addition of one or more other features, entireties, steps, operations, elements, components, and/or sets thereof.

It should be further understood that the term "and/or" used in this specification and the appended claims of this application indicates any combination and all possible combinations of one or more items listed in association, and includes the combinations.

As used in this specification and the appended claims of this application, based on the context, the term "if" may be interpreted as "when" or "once" or "in response to determining" or "in response to detecting". Likewise, the phrase "if it is determined that" or "if (a described condition or event) is detected" may be interpreted as a meaning of "once it is determined that" or "in response to determining" or "once (a described condition or event) is detected" or "in response to detecting (a described condition or event)" depending on the context.

In addition, in the descriptions of this specification and appended claims of this application, the terms "first", "second", "third", and the like are merely intended for the purpose of differentiated description, but shall not be understood as an indication or an implication of relative importance.

Reference to "an embodiment", "some embodiments", or the like described in this specification of this application indicates that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

A window page interaction method provided in embodiments of this application may be used for an electronic device such as a mobile phone, a tablet computer, a wearable device, a vehicle-mounted device, and an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), and a specific type of the electronic device is not limited in embodiments of this application.

For example, the electronic device may be a station (STATION, ST) in a WLAN, or may be a cellular phone, a cordless phone, a session initiation protocol (Session Initiation Protocol, SIP) phone, or a wireless local loop (Wireless Local Loop, WLL) station, a personal digital assistant (Personal Digital Assistant, PDA) device, a handheld device having a wireless communication function, a computing device or another processing device connected to a wireless modem, a computer, a laptop computer, a handheld communication device, a handheld computing device, and/or another device for performing communication in a wireless system, and a next-generation communication system, for example, a mobile terminal in a 5G network or a mobile terminal in a future evolved public land mobile network (Public Land Mobile Network, PLMN) network.

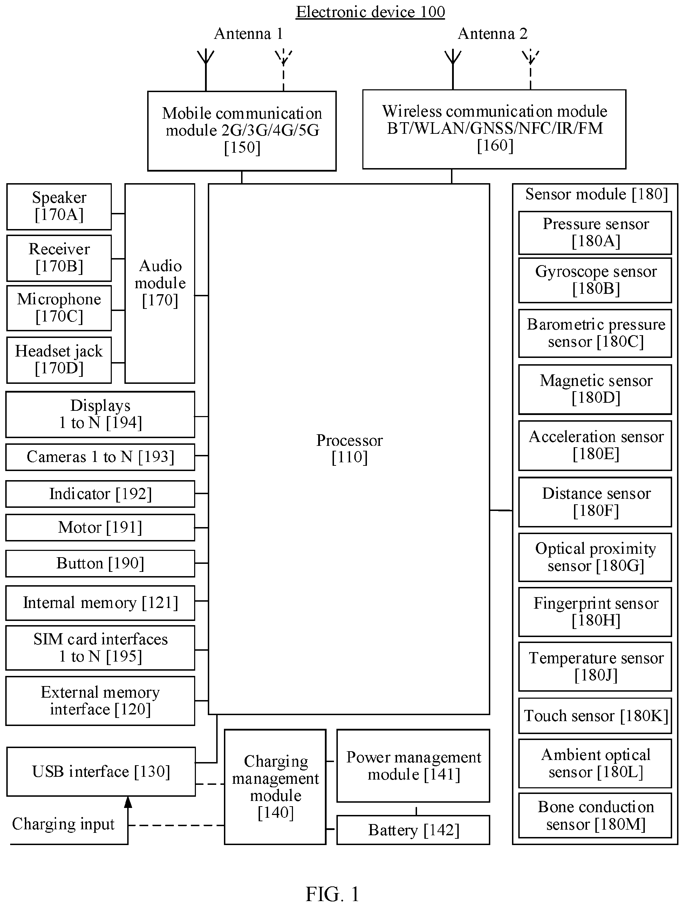

FIG. 1 is a schematic diagram of a structure of an electronic device 100.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient optical sensor 180L, a bone conduction sensor 180M, and the like.

It may be understood that the structure shown in this embodiment of this application does not constitute a specific limitation on the electronic device 100. In some other embodiments of this application, the electronic device 100 may include more or fewer components than those shown in the figure, or combine some components, or split some components, or have different component arrangements. The illustrated components may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset for playing audio through the headset. Alternatively, the interface may be configured to connect to another electronic device, for example, an AR device.

It may be understood that an interface connection relationship between the modules shown in this embodiment of this application is merely an example for description, and constitutes no limitation on the structure of the electronic device 100. In some other embodiments of this application, the electronic device 100 may alternatively use an interface connection manner different from an interface connection manner in this embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 may further supply power to the electronic device through the power management module 141 when the battery 142 is charged.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules of the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more devices integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division code division multiple access (time division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, quantum dot light-emitting diodes (quantum dot light-emitting diodes, QLED), or the like. In some embodiments, the electronic device 100 may include one or N displays 194, where N is a positive integer greater than 1. The display 194 may include a touch panel and another input device.

The electronic device 100 may implement a photographing function through the ISP, the camera 193, the video codec, the GPU, the display 194, the application processor, and the like.

The ISP is configured to process data fed back by the camera 193. For example, during shooting, a shutter is pressed, light is transmitted to a photosensitive element of the camera through a lens, an optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP for converting the electrical signal into a digital image signal. The ISP outputs the digital image signal to the DSP for processing. The DSP converts the digital image signal into an image signal in a standard format such as an RGB format or a YUV format. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform on frequency energy.

The video codec is configured to compress or decompress a digital video. The electronic device 100 may support one or more video codecs. In this way, the electronic device 100 may play back or record videos in a plurality of encoding formats, for example, moving picture experts group (moving picture experts group, MPEG)-1, MPEG-2, MPEG-3, and MPEG-4.

The NPU is a neural-network (neural-network, NN) computation processor. The NPU quickly processes input information by referring to a structure of a biological neural network, for example, by referring to a mode of transmission between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be configured to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (for example, audio data or a phone book) created in a process of using the electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, such as music playing or recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The electronic device 100 may be configured to listen to music or answer a hands-free call through the speaker 170A.

The receiver 170B, also referred to as an "earpiece", is configured to convert an audio electrical signal into a sound signal. When a call is answered or voice information is received through the electronic device 100, the receiver 170B may be put close to a human ear to listen to a voice.

The microphone 170C, also referred to as a "mike" or "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to implement a noise reduction function in addition to collecting a sound signal. In some other embodiments, three, four, or more microphones 170C may alternatively be disposed in the electronic device 100, to collect a sound signal, reduce noise, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change in the capacitance. When a touch operation is performed on the display 194, the electronic device 100 detects intensity of the touch operation through the pressure sensor 180A. The electronic device 100 may also calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the electronic device 100. In some embodiments, an angular velocity of the electronic device 100 around three axes (that is, axes x, y, and z) may be determined through the gyroscope sensor 180B. The gyroscope sensor 180B may be configured to implement image stabilization during photographing. For example, when the shutter is pressed, the gyroscope sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyroscope sensor 180B may be further used for navigation and motion-controlled gaming scenarios.

The barometric pressure sensor 180C is configured to measure barometric pressure. In some embodiments, the electronic device 100 calculates an altitude based on the barometric pressure measured by the barometric pressure sensor 180C, to assist in positioning and navigation.

The magnetic sensor 180D includes a Hall sensor. The electronic device 100 may detect opening and closing of a flip cover leather case through the magnetic sensor 180D. In some embodiments, when the electronic device 100 is a clamshell phone, the electronic device 100 may detect opening and closing of a flip cover based on the magnetic sensor 180D. Further, a feature such as automatic unlocking of the flip cover is set based on a detected opening or closing state of the leather case or a detected opening or closing state of the flip cover.

The acceleration sensor 180E may detect a value of acceleration of the electronic device 100 in all directions (usually on three axes), and may detect a value and a direction of gravity when the electronic device 100 is static. The acceleration sensor 180E may be further configured to identify a posture of the electronic device, and is used in an application such as switching between a landscape mode and a portrait mode or a pedometer.

The distance sensor 180F is configured to measure a distance. The electronic device 100 may measure a distance in an infrared or a laser manner. In some embodiments, in a photographing scenario, the electronic device 100 may measure a distance through the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light through the light-emitting diode. The electronic device 100 detects infrared reflected light from a nearby object through the photodiode. When sufficient reflected light is detected, the electronic device 100 may determine that there is an object near the electronic device 100. When insufficient reflected light is detected, the electronic device 100 may determine that there is no object near the electronic device 100. The electronic device 100 may detect, through the optical proximity sensor 180G, that a user holds the electronic device 100 close to an ear for a call, to automatically perform screen-off for power saving. The optical proximity sensor 180G may also be used in a smart cover mode or a pocket mode to automatically perform screen unlocking or locking.

The ambient optical sensor 180L is configured to sense ambient light brightness. The electronic device 100 may adaptively adjust brightness of the display 194 based on the sensed ambient light brightness. The ambient optical sensor 180L may also be configured to automatically adjust white balance during photographing. The ambient optical sensor 180L may further cooperate with the optical proximity sensor 180G to detect whether the electronic device 100 is in a pocket, to prevent an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing policy based on the temperature detected by the temperature sensor 180J. For example, when the temperature reported by the temperature sensor 180J exceeds a threshold, the electronic device 100 lowers performance of a processor near the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is less than still another threshold, the electronic device 100 boosts an output voltage of the battery 142, to prevent abnormal power-off caused by a low temperature.

The touch sensor 180K is also called a "touch device". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may alternatively be disposed in the headset, to obtain a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the electronic device 100. The electronic device 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or different types. The SIM card interface 195 is also compatible with different types of SIM cards. The SIM card interface 195 is also compatible with an external memory card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

A software system of the electronic device 100 may use a layered architecture, an event-driven architecture, a microkernel architecture, a micro service architecture, or a cloud architecture. In this embodiment of this application, an Android system with a layered architecture is used as an example to describe a software structure of the electronic device 100.

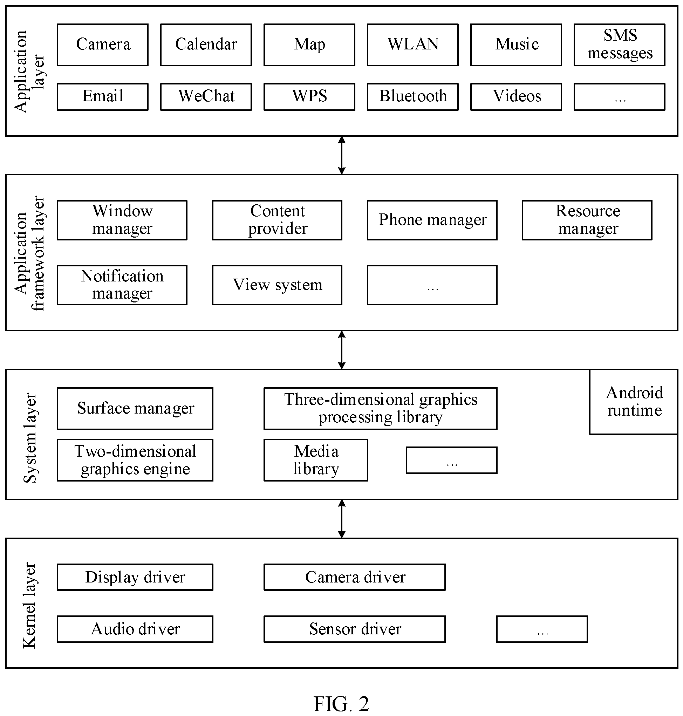

FIG. 2 is a block diagram of a software structure of an electronic device according to an embodiment of this application.

In a layered architecture, software is divided into several layers, and each layer has a clear role and task. The layers communicate with each other through a software interface. In some embodiments, an Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Map, Navigation, WLAN, Bluetooth, Music, Videos, and SMS messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and answered, a browsing history and bookmarks, an address book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function of the electronic device, for example, management of a call status (including answering, hanging up, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph or a scroll bar text, for example, a notification of an application that is run on a background, or may be a notification that appears on a screen in a form of a dialog window. For example, text information is displayed in the status bar, an announcement is given, an electronic device vibrates, or an indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes Java files of the application layer and the application framework layer as binary files. The virtual machine is configured to implement functions such as object life cycle management, stack management, thread management, security and exception management, and garbage collection.

The system library may include a plurality of functional modules, for example, a surface manager (surface manager), a media library (Media Libraries), a three-dimensional graphics processing library (for example, OpenGL ES), and a 2D graphics engine (for example, SGL).

The surface manager is configured to: manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, compositing, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of software and hardware of the electronic device 100 with reference to a capture photographing scenario.

When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a single-tap operation and a control corresponding to the single-tap operation is a control of a camera application icon. A camera application invokes an interface at the application framework layer, to start the camera application. Then, the camera driver is started by invoking the kernel layer, and a static image or a video is captured through the camera 193.

In an existing technology, an electronic device may display various types of displayed content through a display module. The electronic device includes various types of electronic devices such as a smartphone, a computer, a notebook computer, and a tablet computer. The displayed content includes but is not limited to: a static picture, a dynamic picture, a video, an interactive control, a network page, an article, an SMS message, and prompt information. The displayed content in the electronic device may be displayed in a form of a window page. The window page specifically refers to a basic unit that is set in a graphical user interface by an application installed in the electronic device to use data. The application of the electronic device and data locally stored in the electronic device are displayed in an integrated manner in the window page. In the window page, the electronic device may manage, generate, and edit, based on an operation initiated by a user, an application or data displayed in the window page.

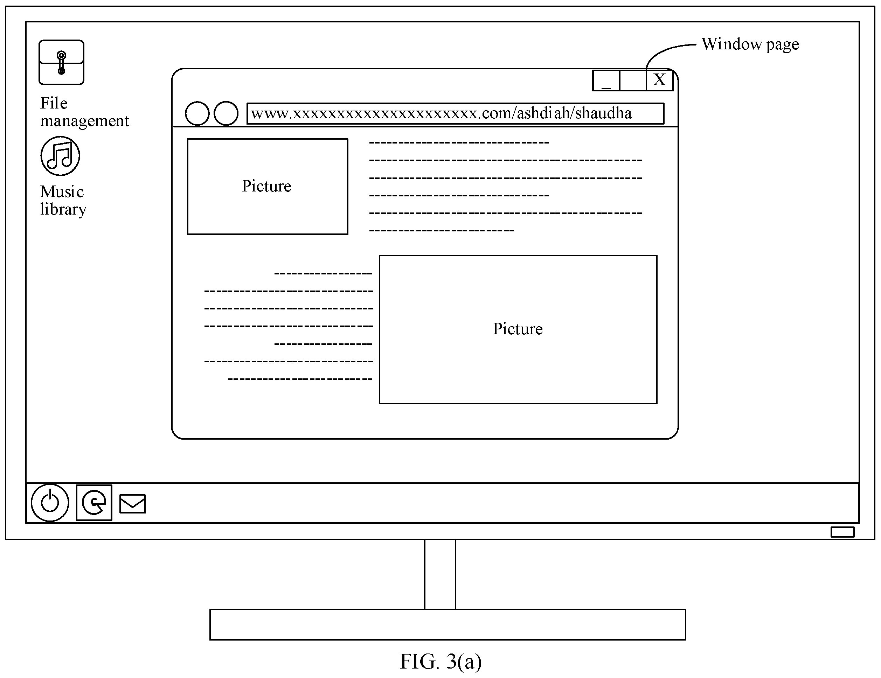

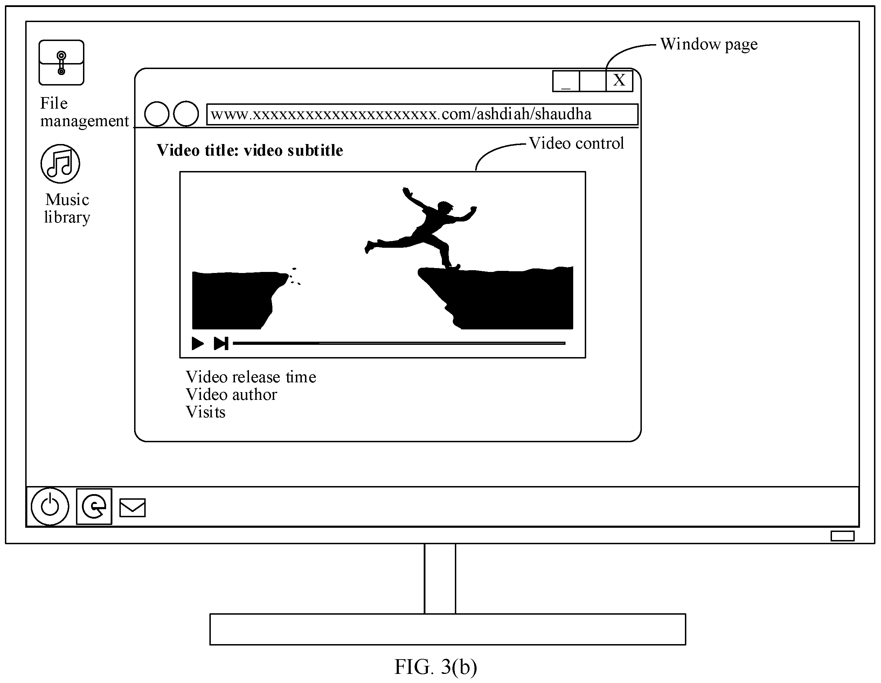

In a possible implementation, a menu and an icon may be set around the window page, and data that needs to be displayed in the window page may be displayed in a central area of the window page. The window page is specifically an operable page that displays data, content, and the like in a window form. With continuous development of electronic technologies, types of content displayed in a window page are increasingly diversified. For example, FIG. 3(a) and FIG. 3(b) are a schematic diagram of an existing window page. Refer to FIG. 3(a) and FIG. 3(b). Displayed content in the window page starts from non-interactive displayed content such as an initial text or picture, such as shown in FIG. 3(a), to current displayed content with strong interaction such as a video playing control, a list control, and an interactive mini-game program that may be embedded, such as shown in FIG. 3(b). In this way, the displayed content is increasingly diversified, interaction with a user is increasingly strong, and can adapt to various application scenarios.

However, as the types of content displayed in the window page are increasingly diversified and strong interactive, a new problem emerges gradually. Because each piece of displayed content in the window page occupies a part of an area of the window page for display, that is, each piece of displayed content is attached to the window page for display, that is, a display level of the window page is lower than a display level of the displayed content, the displayed content covers the part of the display area of the window page. Based on this, if the displayed content in the window page is an operable interactive control, when the electronic device receives an interaction operation initiated by the user in the window page, because there is an overlapping area between the display area of the window page and the display area of the displayed content, the electronic device cannot determine whether an operation object of the interaction operation is the operable control in the window page or the window page.

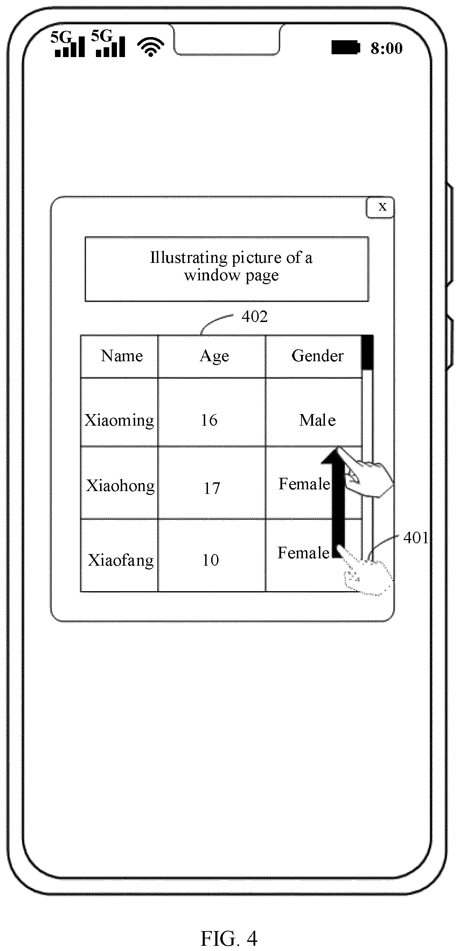

For example, FIG. 4 is a schematic diagram in which an electronic device receives an interaction operation initiated by a user. As shown in FIG. 4, the electronic device receives an upward sliding operation initiated by the user at a location 401 shown in FIG. 4. The location 401 is located on an operable control 402 in a window page displayed in the foreground of the electronic device, the operable control 402 is specifically a list control. The list control may display a preset data list, and the data list may include N rows of data. However, because the list control is limited to a display area of the window page, only three rows of data may be displayed, and data displayed in the list control may be changed by sliding up and down. Based on this, when receiving the upward sliding operation on the operable control 402, the electronic device cannot determine whether the interaction operation needs to change the data displayed in the list control or move the window page upward. As a result, an inaccurate response to the interaction operation is caused, an operation intention of the user cannot be identified, and operation accuracy and user use experience are reduced.

To determine the operation intention of the user, in an existing interaction operation response technology, a corresponding dedicated operation area may be configured in an operable control, that is, an operation object corresponding to an interaction operation initiated in the dedicated operation area of the operable control is the operable control. If an initiated interaction operation is outside the dedicated operation area, a corresponding operation object is a window page, to distinguish between operation objects of interaction operations.

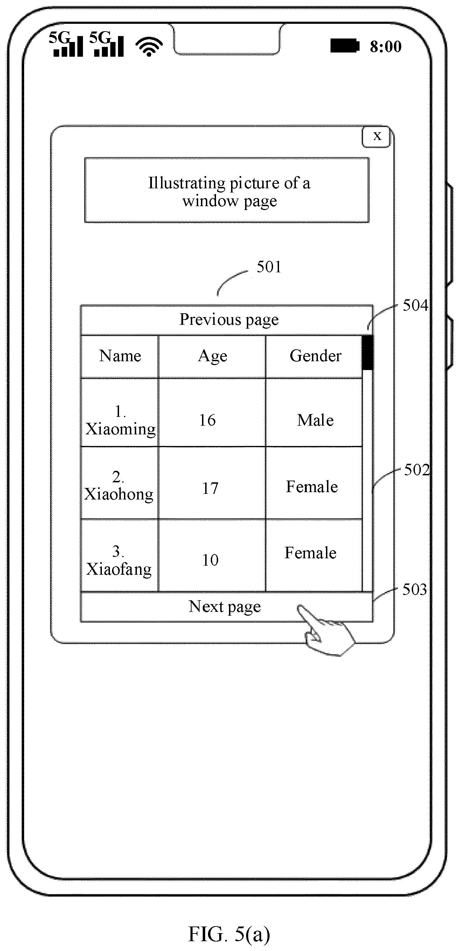

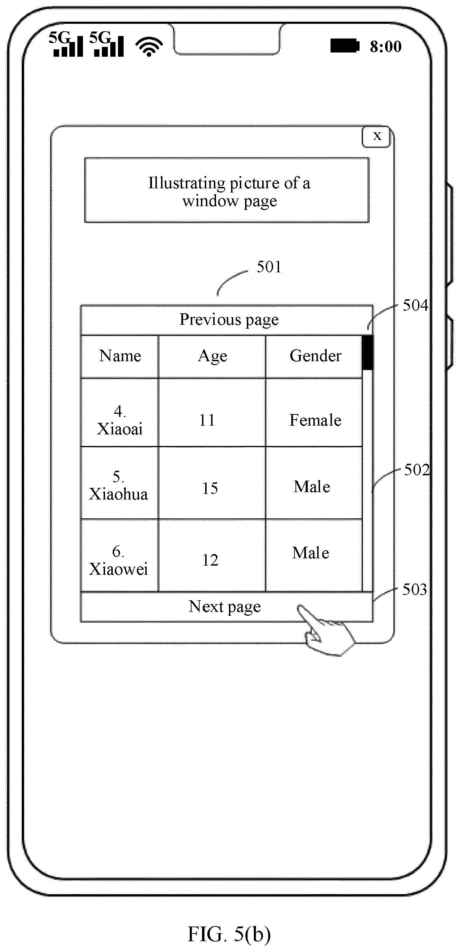

For example, FIG. 5(a) and FIG. 5(b) are a schematic diagram of controlling an operable control in a window page based on a dedicated operation area. As shown in FIG. 5 (a), a window page is displayed in the electronic device. The window page includes a list control 501, and the list control 501 includes an area 502 for displaying a data list, and dedicated operation areas 503 (next page) and 504 (previous page) corresponding to the list control 501. If a user needs to perform an operation on the list control 501, an interaction operation may be initiated in the dedicated operation area 503, for example, tapping the foregoing dedicated operation area 503. In this case, data columns in the list control 501 are switched for displayed content. Originally displayed data columns are 1 to 3, and are switched to list content of the next page. The data columns displayed in the list control 501 may be changed to 4 to 6, as shown in FIG. 5(b). If the user initiates an interaction operation at another location outside the dedicated operation area 503, an operation object of the interaction operation is identified as the window page.

In the foregoing manner, corresponding dedicated operation areas are configured for different operable controls, to determine an operation object corresponding to an interaction operation initiated in an interaction window. However, in this manner, a dedicated area needs to be obtained through division in the window page to collect an interaction operation of the operable control. If the dedicated operation area is large, a page layout of each control and displayed content in the window page is greatly affected, and an amount of information that can be accommodated in the window page is reduced. If the dedicated operation area is small, convenience of a user operation is reduced, and an invalid operation such as an incorrect tap is increased, affecting user use experience.

It can be learned that in an existing window page interaction technology, two aspects of distinguishing between operation objects of interaction operations and reducing a layout of the window page cannot be considered simultaneously. This affects applications of the operable control in the window page, and further reduces diversity development of displayed content in the window page.

### Embodiment 1

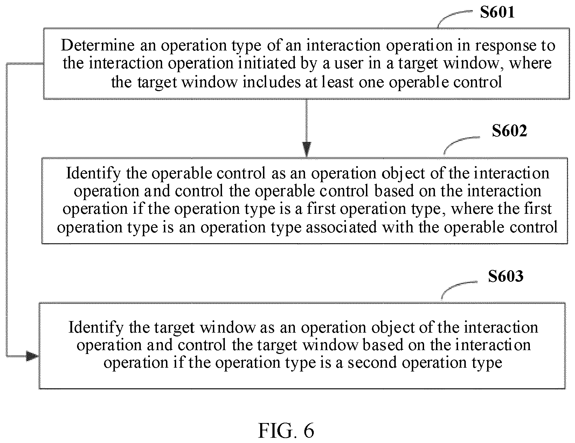

Therefore, to resolve a disadvantage of an existing window page interaction technology, this application provides a window page interaction method. The window page interaction method may be specifically performed by an electronic device, and the electronic device may be a smartphone, a tablet computer, a computer, or a smartwatch, or the like. The electronic device includes a display module and an interaction module, displays a window page through the display module, and obtains an interaction operation of a user through the interaction module. The display module may be specifically a module having a display function, such as a display or a projector. The interaction module may be: a module having a man-machine interaction function, such as a mouse, a keyboard, or a controller. Preferably, the display module is a touchscreen having a touch control function. When displaying a window page, the display module may obtain an interaction operation initiated by a user. FIG. 6 is an implementation flowchart of a window page interaction method according to an embodiment of this application. Details are as follows:

In S601, an operation type of an interaction operation is determined in response to the interaction operation initiated by a user in a target window, where the target window includes at least one operable control.

In this embodiment, an electronic device may display at least one window page. The window page may be generated based on an application installed in the electronic device, for example, a window page corresponding to an application operation interface, or may be generated based on a device system of the electronic device, for example, a pop-up window generated when the electronic device receives a system notification or an SMS message. It should be noted that, the electronic device may simultaneously display a plurality of window pages in a display interface. A specific display quantity of window pages that can be displayed may be determined based on a plurality of different factors such as a device type of the electronic device, a size of a display module, and a device system.

In a possible implementation, if the electronic device simultaneously displays a plurality of window pages, that is, the plurality of window pages simultaneously displayed are all in a foreground running state, in this case, the electronic device may determine the foregoing target window based on a window page corresponding to a previously responded interaction operation. Because the plurality of window pages are all running in the foreground, based on an operation sequence of each window page, a window page that is recently operated may be used as a window page that is being operated, that is, the foregoing target window, and a window page other than the window page that is being operated may be used as a to-be-operated window page. Therefore, when the user initiates the interaction operation, if the interaction operation is not a window page selection operation, it may be identified that a window page that needs to be operated by the interaction operation is a window page that is being operated. If the interaction operation is a window page selection operation, a window page that needs to be specified may be determined from the to-be-operated window page based on the interaction operation, and the window page specified by the interaction operation is activated to a top layer of the display interface for display, and is identified as a window page that is being operated.

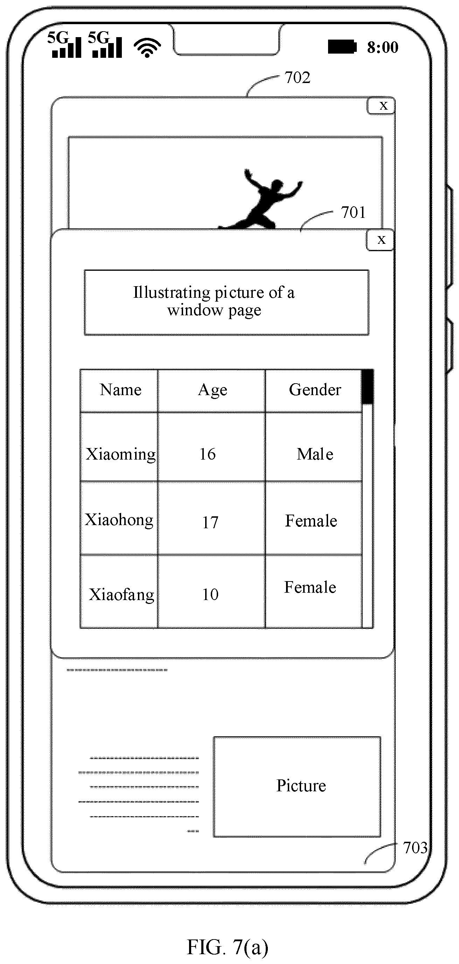

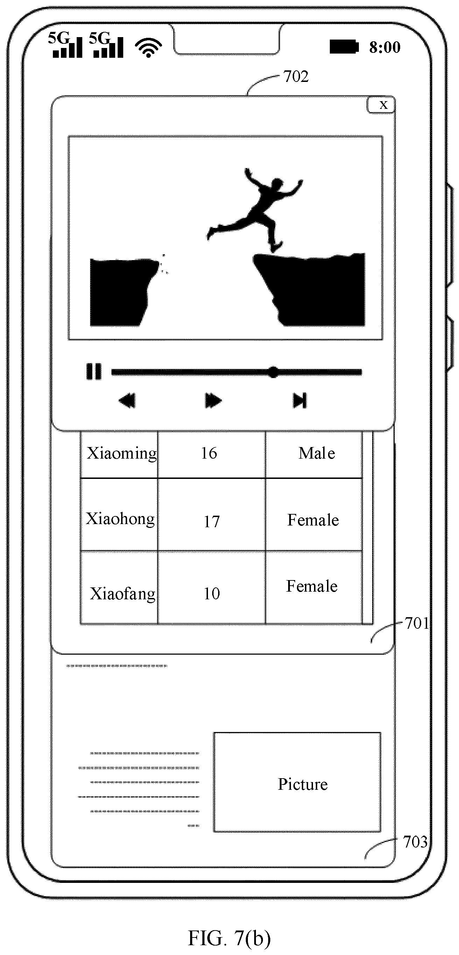

For example, FIG. 7(a) and FIG. 7(b) are a schematic diagram of displaying a multi-window page according to an embodiment of this application. As shown in FIG. 7(a), a plurality of window pages may be simultaneously displayed in a display interface of an electronic device: a first window 701, a second window 702, and a third window 703. A window page displayed at a top layer is the first window 701. The first window 701 is a window page that is recently operated, that is, a window page that is being operated. The second window 702 and the third window 703 have lower display levels than that of the first window 701, and are to-be-operated window pages. In this case, if the electronic device receives an interaction operation initiated by a user, the electronic device determines whether the interaction operation is a window selection operation, for example, tapping a display area of the second window 702 or tapping an icon corresponding to 702. If the interaction operation is the window selection operation, the electronic device determines, based on the window selection operation, a window page selected by the user. For example, in this embodiment, if detecting that the user taps the display area of the second window 702, the electronic device determines that the user needs to perform an operation on the second window 702, uses the first window 701 as a to-be-operated window page, switches the second window 702 to the top layer for display, as shown in FIG. 7(b), and uses the second window 702 as a window page that is being operated.

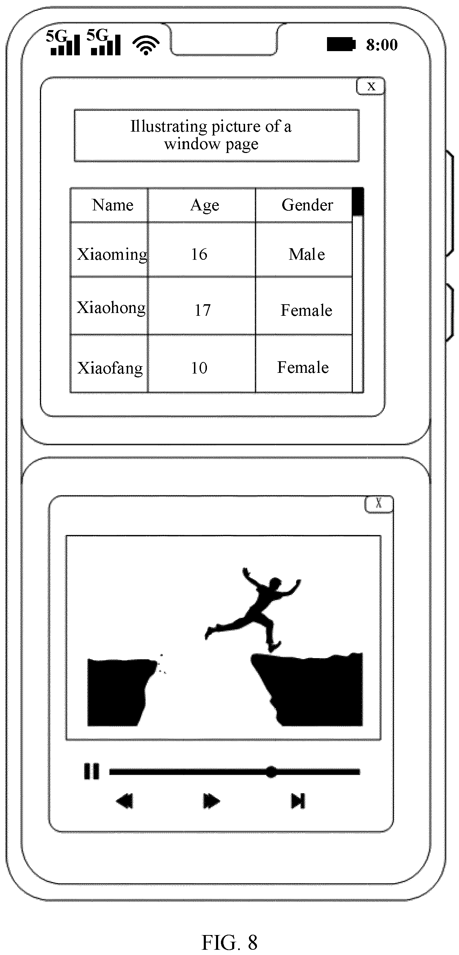

In a possible implementation, if the electronic device supports a split-screen function, the electronic device may display a plurality of independent sub-screens. FIG. 8 shows a display interface for split-screen display according to an embodiment of this application. In this case, each sub-screen may display a corresponding window page. The electronic device may determine, based on a tap location of an interaction operation, a sub-screen that needs to be operated by the interaction operation, and identify a window page displayed in the sub-screen as a target window.

Optionally, the electronic device may determine, based on coordinates of an interaction operation collected for the first time, a sub-screen corresponding to the interaction operation. For example, the interaction operation may be a sliding operation, and the electronic device may identify coordinates of the first touch point corresponding to the sliding operation. If the coordinates fall into a sub-screen displayed in a split-screen mode, the sub-screen corresponding to the first touch point is identified as a sub-screen that needs to be operated by the interaction operation, and a window page displayed in the sub-screen is used as a target page.

Optionally, the electronic device may obtain coordinate information corresponding to the interaction operation, and if the coordinate information falls within a display area corresponding to a window page, identify the window page as a target window corresponding to the interaction operation.

In this embodiment, the operable control may be displayed in the target window. Certainly, in addition to the displayed operable control, the target window may further display other displayed content, such as a picture, a text, and a video. The operable control in the target window is specifically a control that may perform a corresponding operation based on the interaction operation.

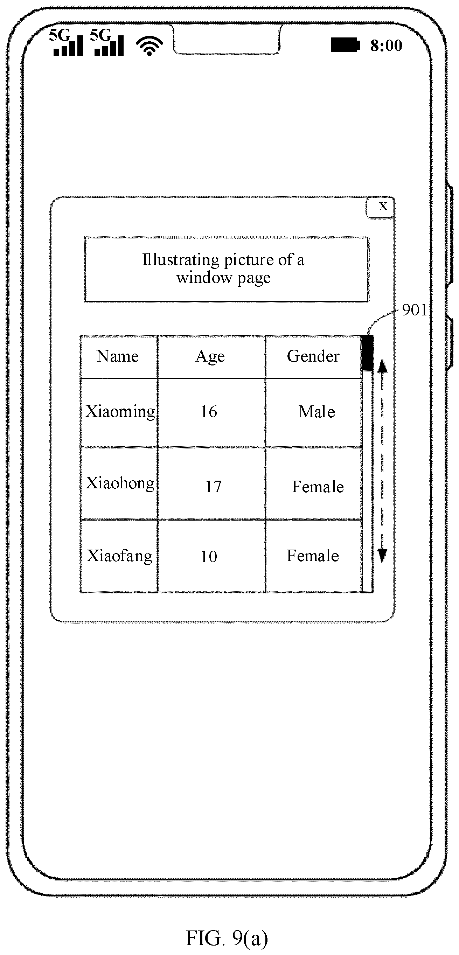

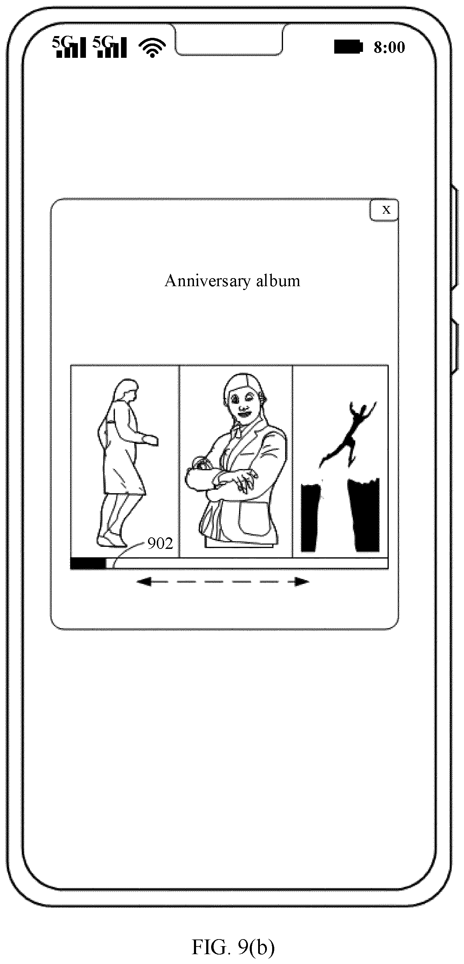

For example, FIG. 9(a) and FIG. 9(b) are a schematic diagram of an operable control according to an embodiment of this application. As shown in FIG. 9(a), a target window includes a list control, and the list control includes a list progress slider 901, used to display a location of currently displayed data in a list. The list control may slide up and down to change currently displayed content. As shown in FIG. 9(b), a target window includes an album control. A plurality of images may be displayed in the album control, and an image progress slider 902 is configured to display a location of a currently displayed image in an album. The album control may change the currently displayed image based on a left-right sliding operation initiated by a user, to implement image switching. Certainly, in addition to responding to the sliding operation initiated by the user, the operable control may further respond to various types of interaction operations. An operation type of the interaction operation is not limited herein.

In a possible implementation, the target window may include one operable control, or may include two or more operable controls.

In a possible implementation, if the target window does not include any operable control, the operation type of the interaction operation does not need to be determined, and the target window may be directly controlled based on the interaction operation. Based on this, before performing S601, the electronic device may first determine a quantity of operable controls included in the target window; and if the quantity of operable controls included in the target window is 0, control the target window based on the interaction operation; or if the quantity of operable controls included in the target window is not 0, perform an operation of determining the operation type of the interaction operation.

In this embodiment, the electronic device may receive, through an interaction module, the interaction operation initiated by the user. If the interaction module is specifically a touchscreen, the interaction operation may include: touch operations such as a pressing operation and a sliding operation. If the interaction module is specifically a mouse, the interaction operation may include: a tap operation, a double-tap operation, a scroll operation of a mouse scroll wheel, a touch-based selection operation, and the like. The electronic device may collect, through the interaction module, the interaction operation initiated by the user. The electronic device may be built in the electronic device. For example, if the electronic device is a smartphone, the interaction module may be a touchscreen built in the electronic device. The interaction module may alternatively be an external device, and is connected to the electronic device through a serial interface, to obtain the interaction operation of the user, such as a mouse, a keyboard, and a controller.

In this embodiment, the electronic device may obtain, through the interaction module, the interaction operation initiated by the user. The interaction module may send the collected interaction operation to a processor of the electronic device. After receiving the interaction operation, the processor of the electronic device first identifies the operation type of the interaction operation, and performs a corresponding response procedure based on the operation type.

In a possible implementation, the electronic device may pre-record an operation type associated with the operable control, and identify the operation type associated with the operable control as a first operation type. Similarly, the electronic device may also pre-record an operation type associated with the target window, and identify the operation type associated with the target window as a second operation type.

Optionally, the electronic device may identify an operation type other than the first operation type as the second operation type. To be specific, the electronic device only needs to record the operation type associated with the operable control, that is, the first operation type, and does not need to record the second operation type associated with the target window. The electronic device may determine that the operation type of the interaction operation is the second operation type when the electronic device only needs to identify that the operation type of the interaction operation is not the first operation type.

In a possible implementation, first operation types corresponding to all operable controls may be the same. For example, the electronic device may preset a plurality of standard gestures, and different standard gestures may control the operable control of the target window to perform a specified operation. Based on this, if the electronic device detects that the interaction operation initiated by the user matches any standard gesture, the electronic device identifies that the operation type of the interaction operation is the first operation type, and performs an operation in S602. If the interaction operation does not match any standard gesture, the electronic device identifies that the operation type of the interaction operation is the second operation type, and performs an operation in S603.

In a possible implementation, different operable controls may correspond to different first operation types.

In a possible implementation, the first operation type and the second operation type are two mutually exclusive operation types. In other words, if the interaction operation does not belong to the first operation type, the interaction operation definitely belongs to the second operation type. In this case, the electronic device may determine whether the interaction operation belongs to the first operation type, and if the interaction operation belongs to the first operation type, perform the operation in S602. If the interaction operation does not belong to the first operation type, the electronic device identifies that the interaction operation belongs to the second operation type, and performs the operation in S603. Certainly, the electronic device may also determine whether the interaction operation belongs to the second operation type, and if the interaction operation belongs to the second operation type, perform the operation in S603. If the interaction operation does not belong to the second operation type, the electronic device identifies that the interaction operation belongs to the first operation type, and performs the operation in S602. By configuring two mutually exclusive operation types, an operation type of the interaction operation can be determined only by determining whether the interaction operation matches an operation type, thereby improving operation type identification efficiency and further improving a response speed of the interaction operation.

In a possible implementation, the electronic device may be configured with a preset touch debounce condition, and the touch debounce condition may be specifically a jitter scope. The electronic device may obtain an actually generated interaction track of the interaction operation, and obtain a jitter scope corresponding to the interaction operation by using the first touch point of the interaction operation as a reference point. For example, the jitter scope is a circular area. In this case, a circular area scope may be generated by using the first touch point of the interaction operation as a circle center, and used as the jitter scope of the interaction operation. If the actually generated interaction track falls within the jitter scope, the electronic device identifies that the interaction operation is an invalid interaction operation, and does not need to respond to the interaction operation. If the interaction track of the interaction operation is outside the jitter scope, the electronic device identifies that the interaction operation is a valid interaction operation, and determines an operation type of the interaction operation.

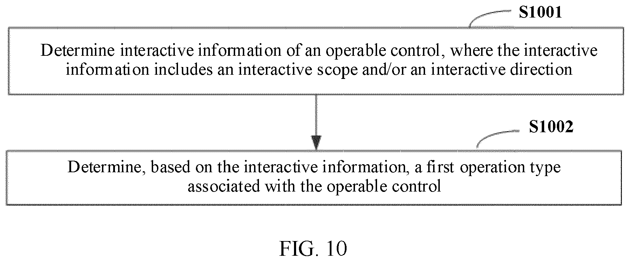

Further, in another embodiment of this application, FIG. 10 is a specific implementation flowchart of a window page interaction method according to another embodiment of this application. Refer to FIG. 10. Compared with the foregoing embodiment, before S601, the window page interaction method provided in this embodiment of this application may further include the following steps. S1001 and S1002 are described in detail as follows:

Further, before the determining an operation type of an interaction operation in response to the interaction operation initiated by a user in a target window, the method further includes:
S1001: Determine interactive information of an operable control. The interactive information includes an interactive scope and/or an interactive direction.

In this embodiment, an electronic device may determine a first operation type based on the interactive information of the operable control. When each operable control is configured in a window page, interactive information of the operable control may be preset. The interactive information may be recorded in a data packet corresponding to the operable control. In this case, the electronic device may read a configuration field corresponding to the data packet, to obtain the interactive information of the operable control.

In a possible implementation, when loading the target window, the electronic device parses the data packet of the operable control, and buffers the data packet of the operable control in a buffer area of a memory of the electronic device. In this case, the electronic device may obtain the interactive information of the operable control from the buffer area.

In this embodiment, the interactive information may include the interactive scope and/or the interactive direction.

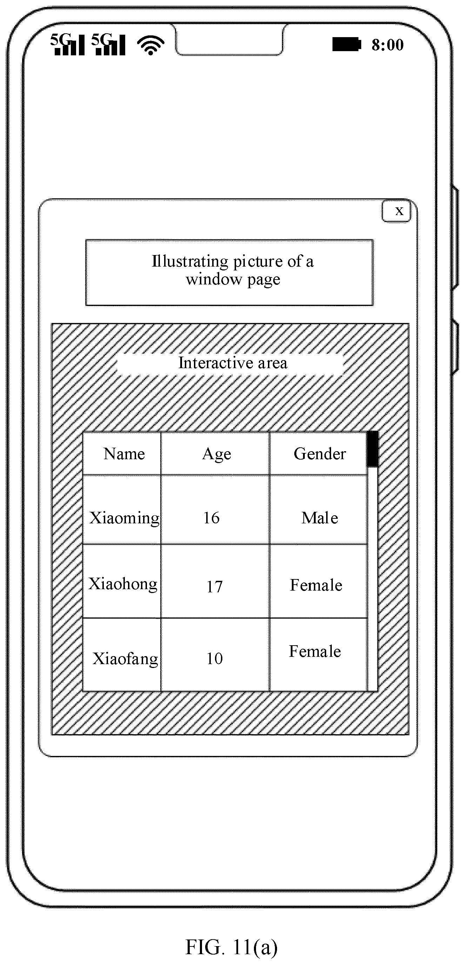

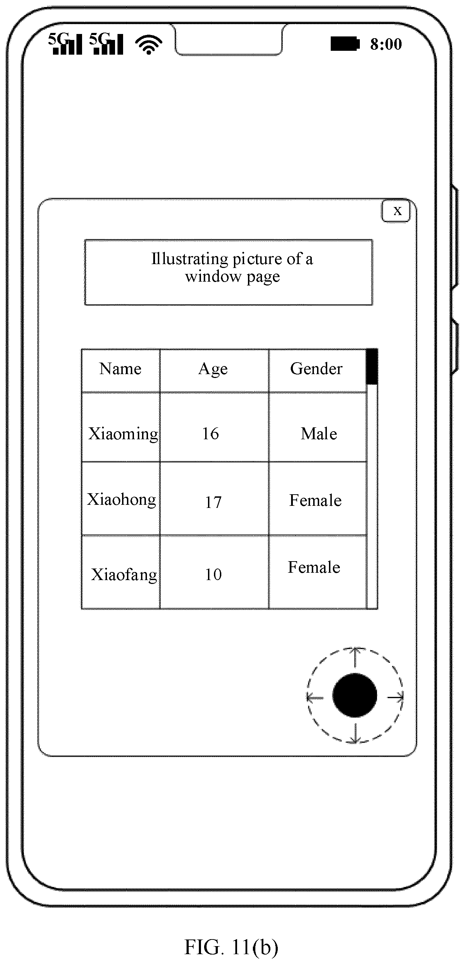

The interactive scope is specifically a scope in which the operable control and/or displayed content in the operable control may interact. For example, FIG. 11 (a) and FIG. 11(b) are a schematic diagram of an interactive scope according to an embodiment of this application. As shown in FIG. 11(a), the operable control may be moved in a target window, the target window may be a corresponding movable area configured for the operable control, and the movable area is an interactive scope corresponding to the operable control. As shown in FIG. 11(b), a virtual joystick is configured for the operable control, the virtual joystick has a corresponding touchable area, and the touchable area of the virtual joystick is an interactive scope corresponding to the operable control.

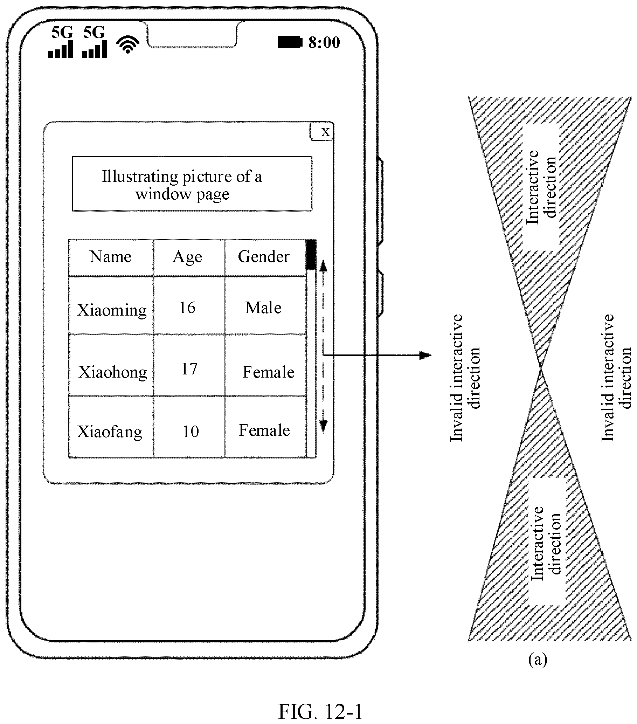

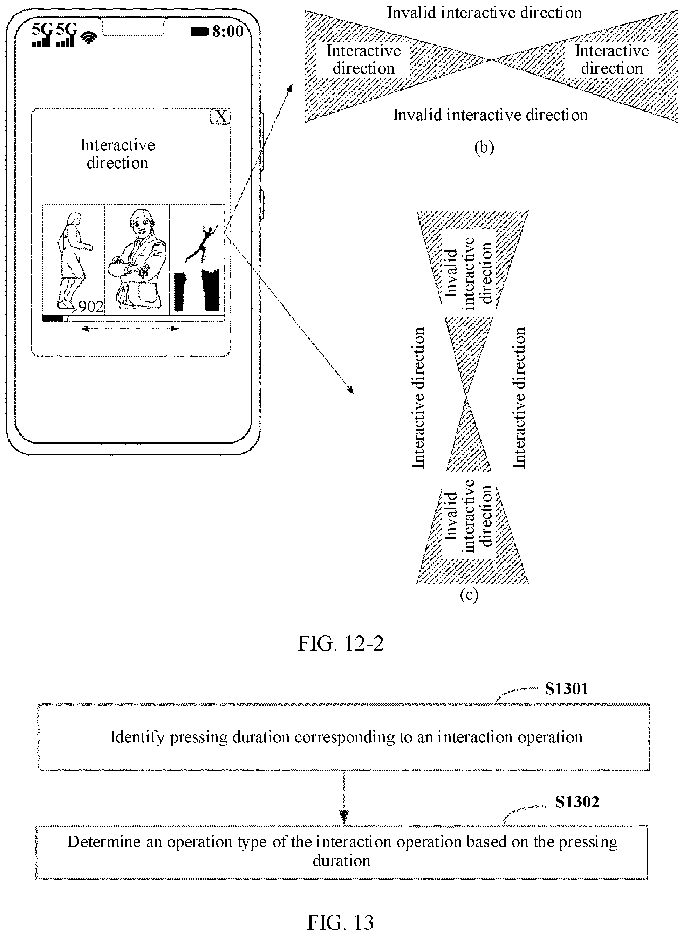

The interactive direction is specifically a direction in which the operable control and/or displayed content in the operable control may interact. For example, FIG. 12-1 and FIG. 12-2 are a schematic diagram of an interactive direction according to an embodiment of this application. As shown in (a) in FIG. 12-1 and FIG. 12-2, the operable control may be moved in a preset direction. For example, the operable control is specifically a list control, and a data column displayed in a list may be changed by sliding up and down. That is, an interactive direction corresponding to the list control is a vertical direction. However, when a user initiates an interaction operation, it cannot be ensured that a sliding direction is always the vertical direction. Therefore, all directions that are within a specific offset angle from the vertical direction may be identified as movable directions. As shown in (b) in FIG. 12-1 and FIG. 12-2, the operable control is specifically an album control, and an image displayed in the album control may be switched by sliding left or right. That is, an interactive direction corresponding to the album control is a horizontal direction. Similarly, the electronic device may allow a horizontal direction within a specific offset angle to be identified as a sliding operation of horizontal movement.

In a possible implementation, the interactive information specifically includes an invalid interactive direction and/or an invalid interactive scope of the operable control. Correspondingly, the electronic device may use a scope other than the invalid interactive direction and/or the invalid interactive scope of the operable control as the interactive direction and/or the interactive scope of the operable control. For example, still with reference to (b) in FIG. 12-1 and FIG. 12-2, the operable control is specifically the album control, and may be moved in a left-right direction. Therefore, movement in a vertical direction is an invalid movement direction for the operable control. Based on this, a movable direction in the vertical direction may be used as the invalid direction corresponding to the operable control. As shown in (c) in FIG. 12-1 and FIG. 12-2, a direction other than the invalid direction is used as the interactive direction of the operable control. Correspondingly, for determining, based on the invalid interactive scope, the interactive scope of the interactive control, refer to the foregoing manner for implementation.

In S1002, the first operation type associated with the operable control is determined based on the interactive information.

In this embodiment, the electronic device may determine, based on the interactive information of the operable control, the first operation type associated with the operable control. Specifically, if the electronic device collects that the interaction operation initiated by the user matches the interactive information, for example, an operation area of the interaction operation falls within an operable scope of the operable control, and/or an operation direction of the interaction operation falls within a coverage area of an operable direction of the operable control, the electronic device identifies that the operation type of the interaction operation is the first operation type.

In a possible implementation, the electronic device may also obtain interactive information corresponding to the target window. To distinguish from the interactive information of the operable control, the interactive information of the target window is referred to as second interactive information below. A manner of obtaining the second interactive information may be the same as a manner of determining the interactive information of the operable control, and details are not described herein again. The second interactive information may also include an interactive scope and/or an interactive direction of the target window. Correspondingly, after obtaining the interaction operation initiated by the user, the electronic device may match the interaction operation with the second interactive information, and if the interaction operation matches the second interactive information, identify that the interaction operation belongs to a second operation type. If the interaction operation does not match the second interactive information, the electronic device identifies that the interaction operation does not belong to the second operation type.

Further, in another embodiment of this application, the second operation type is an operation type other than the first operation type. Because the first operation type is an interaction operation of the operable control, an interaction operation invalid for the operable control is definitely an interaction operation initiated for the target window. Therefore, it can be ensured that control of the operable control is not affected, and operation objects can be distinguished.

In this embodiment of this application, the interactive information of the operable control is determined, and the first operation type corresponding to the operable control is determined based on the interactive information of the operable control, to ensure that the first operation type is an operation type valid for the operable control, so that the operable control is controlled based on the interaction operation valid for the operable control, and the target window is controlled based on the interaction operation invalid for the operable control, to identify the operation object of the interaction operation.

Further, in another embodiment of this application, FIG. 13 is a specific implementation flowchart of S601 in a window page interaction method according to still another embodiment of this application. Refer to FIG. 13. Compared with the foregoing embodiment, in the window page interaction method provided in this embodiment of this application, S601 may include the following steps. S1301 and S1302 are described in detail as follows:
Further, the determining an operation type of an interaction operation in response to the interaction operation initiated by a user in a target window includes:
In S1301, pressing duration corresponding to the interaction operation is identified.

In this embodiment, an electronic device may determine, based on the pressing duration corresponding to the interaction operation, the operation type corresponding to the interaction operation. In other words, the electronic device may identify, based on the pressing duration of the interaction operation initiated by the user, an operation object that needs to be operated by the user, to implement intention identification on the operation object.

In a possible implementation, the pressing duration corresponding to the interaction operation is specifically pressing time corresponding to the first operation point of the interaction operation.

For a tap operation, if the interaction operation is the tap operation, a first operation point of the interaction operation, that is, a tap location corresponding to the tap operation, is determined, stay time corresponding to the tap operation at the tap location is identified, and the stay time is identified as pressing duration corresponding to the interaction operation.

For a sliding operation, if the interaction operation is the sliding operation, a time interval from a time point at which the interaction operation starts to a time point before sliding starts is identified as pressing duration corresponding to the interaction operation. For example, when the user initiates the sliding operation, a continual sliding path is generated, and the first touch point corresponding to the sliding path is a touch point corresponding to "a time point at which the interaction operation starts to a time point before sliding starts". The electronic device may determine stay duration corresponding to the first touch point, and identify the stay duration as pressing duration corresponding to the interaction operation. Sliding operations may be classified based on the stay duration corresponding to the first touch point into at least: a short-press sliding type and a long-press sliding type.

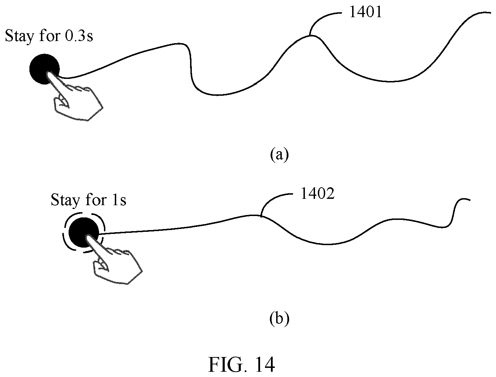

For example, FIG. 14 is a schematic diagram of a sliding operation according to an embodiment of this application. As shown in (a) in FIG. 14, when the user initiates the sliding operation, the first touch point is a point A, sliding is performed starting from the point A, and a sliding track 1401 is generated. Stay time at the point A is 0.3s, and the stay time of the first touch point is less than a preset time threshold. Therefore, the sliding track 1401 is the short-press sliding type.

As shown in (b) in FIG. 14, when the user initiates the sliding operation, the first touch point is a point B, sliding is performed starting from the point B, and a sliding track 1402 is generated. Stay time at the point B is 1s, and the stay time of the first touch point is greater than or equal to the preset time threshold. Therefore, the sliding track 1402 is the long-press sliding type.

Optionally, the electronic device may identify an interaction operation whose stay time at the first touch point is less than the preset time threshold as a first operation type, that is, an operation object of the interaction operation is an operable control. Correspondingly, the electronic device may identify an interaction operation whose stay time at the first touch point is greater than or equal to the preset time threshold as a second operation type, that is, an operation object of the interaction operation is the target window.

Alternatively, the electronic device may identify an interaction operation whose stay time at the first touch point is less than the preset time threshold as a second operation type, that is, an operation object of the interaction operation is the target window. Correspondingly, the electronic device may identify an interaction operation whose stay time at the first touch point is greater than or equal to the preset time threshold as a first operation type, that is, an operation object of the interaction operation is an operable control.

In S1302, the operation type of the interaction operation is determined based on the pressing duration.

In this embodiment, after determining the pressing duration corresponding to the interaction operation, the electronic device may determine, based on different pressing duration, the operation type corresponding to the interaction operation.

In a possible implementation, the electronic device may be configured with at least one time threshold, so that the pressing duration is divided into at least two time intervals based on the time threshold. Different time intervals may correspond to different operation types. The electronic device may identify a time interval within which pressing duration corresponding to a current interaction operation falls, and use an operation type associated with the time interval as the operation type corresponding to the interaction operation. For example, an interaction operation whose pressing duration is less than the preset time threshold is identified as the second operation type, that is, an operation object of the interaction operation is the target window. An interaction operation whose pressing duration is greater than or equal to the preset time threshold is identified as the first operation type, that is, an operation object of the interaction operation is the operable window.

In this embodiment of this application, the pressing duration of the interaction operation is identified, and the operation type corresponding to the interaction operation is determined. In this way, different operation objects are controlled in different operation manners, and no corresponding operation control or operation area needs to be additionally added. Therefore, accuracy of the interaction operation can be improved, and impact on a window page layout can also be avoided.

In S602, the operable control is identified as the operation object of the interaction operation and the operable control is controlled based on the interaction operation if the operation type is the first operation type. The first operation type is an operation type associated with the operable control.

In this embodiment, when the electronic device detects that the interaction operation matches the first operation type associated with the operable control, it indicates that the operation object corresponding to the interaction operation is the operable control. Therefore, the electronic device may control the operable control based on the interaction operation. For example, if the interaction operation is sliding up 50 pixels pixels, 50 pixels may be moved up for the operable control. Certainly, if the interaction operation is a close operation, the operable control may be removed from the target window. Therefore, a control operation on the operable control is specifically determined based on actual operation content of the interaction operation. The operation content and a control effect of the operable control are not limited herein.

In a possible implementation, the target window may further include two or more operable controls. In this case, different operable controls correspond to different operation types. For ease of differentiation, operation types of operable controls are collectively referred to as the first operation type, and operation types of the target window are collectively referred to as the second operation type. Therefore, if the target window includes a plurality of operable controls, when it is determined that the operation object of the interaction operation is the operable control, that is, the operation type of the interaction operation is the first operation type, the operable control corresponding to the interaction operation may be further identified.

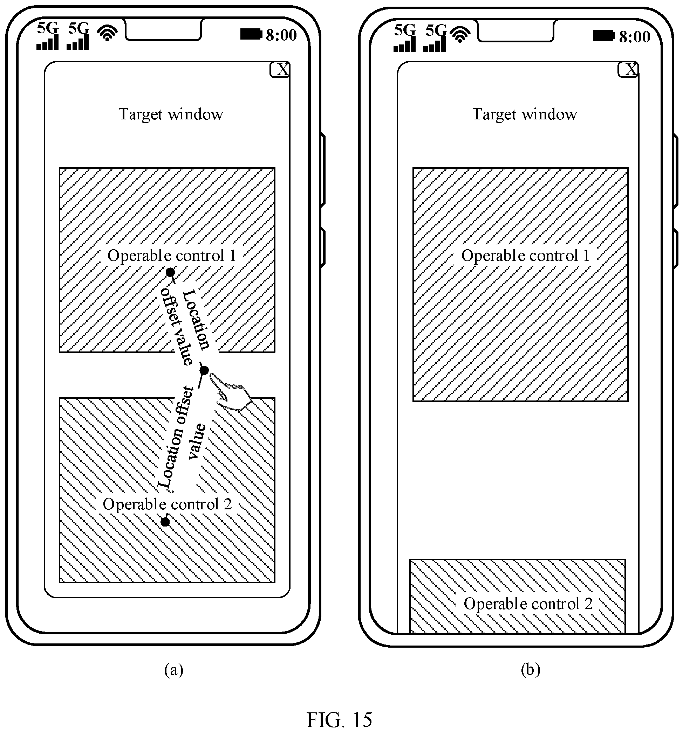

Optionally, for example, FIG. 15 is a schematic implementation diagram of determining an operable control according to an embodiment of this application. A manner in which the electronic device determines the operable control corresponding to the interaction operation may be as follows:
1. As shown in (a) in FIG. 15, location offset values between the interaction operation and two operable controls are calculated based on coordinate information of the interaction operation, and an operable control with a smaller location offset value is used as an operable control corresponding to the interaction operation. The coordinate information of the interaction operation may be specifically coordinates of the first touch point of the interaction operation. When a location offset value between the interaction operation and an operable control is calculated, coordinates corresponding to a control center of the operable control may be obtained and used as feature coordinates of the operable control, and the location offset value is calculated based on the feature coordinates and the coordinate information of the interaction operation. Certainly, coordinates of a boundary point, on the operable control, closest to the first touch point of the interaction operation may alternatively be obtained, the foregoing location offset value is calculated based on the coordinates of the boundary point and the coordinates of the first touch point, and the operable control corresponding to the interaction operation is determined based on the location offset value.
2. As shown in (b) in FIG. 15, if one target window includes a plurality of operable controls, and due to a limitation of display space, the plurality of operable controls cannot be fully displayed simultaneously in a display interface, for example, an operable control 1501 is in a fully displayed state, but a part of an area of an operable control 1502 is blocked, certainly, when there are a large quantity of operable controls, a part of the operable controls may be in a hidden display state, the electronic device may calculate a display ratio of each displayable control, and select an operable control with a highest display ratio as an operation object corresponding to the interaction operation. If display ratios of a plurality of operable controls are all 100%, that is, the operable controls are in the fully displayed state, a distance between center coordinates of the display interface and each of the operable controls in the fully displayed state is calculated separately, and an operable control with a smallest distance is selected as an operation object of the interaction operation.

Optionally, different operable controls may correspond to different operation types. For example, an operation type corresponding to an operable control A is a first operation type A, and an operation type corresponding to an operable control B is a first operation type B. In this case, when determining the interaction operation type, the electronic device may determine that the interaction operation type is the second operation type, the first operation type A, or the second operation type B, and then determine a specific operable control corresponding to the interaction operation. In other words, when the operation type of the interaction operation is determined, the operable control that needs to be operated may be determined from the plurality of operable controls.

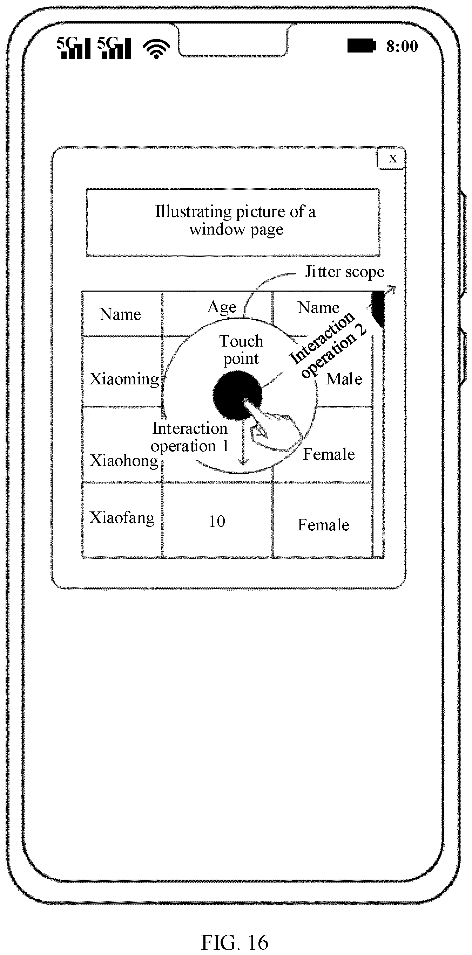

Further, in another embodiment of this application, after it is determined that the interaction operation belongs to the first operation type, and before the operable control is controlled based on the interaction operation, whether the interaction operation is a valid interaction operation may be identified, that is, the interaction operation is compared with a preset jitter scope. For example, FIG. 16 is a schematic diagram of a jitter scope according to an embodiment of this application. As shown in FIG. 16, a jitter scope may be preset for the electronic device. If the interaction operation falls within the jitter range, the electronic device identifies the interaction operation as an invalid operation, for example, an interaction operation 1. If the interaction operation is outside the jitter scope, the electronic device identifies the interaction operation as a valid operation, for example, an interaction operation 2; and may not respond to the invalid interaction operation, and may respond to the valid interaction operation.

In an embodiment of this application, there is operation time existing when a user initiates an interaction operation, and when the interaction operation is a sliding operation, corresponding operation duration is long. To implement a real-time response between the electronic device and the interaction operation, the electronic device may control the operable control based on the obtained interaction operation while collecting the interaction operation of the user. Based on this, a plurality of collection periodicities may be set for the electronic device. To implement a real-time response, periodicity duration of the collection periodicity may be short, for example, may be 0.1s, and the operation time of the interaction operation initiated by the user may include N collection periodicities. After collecting an interaction operation corresponding to an n^{th} (where n is a positive integer less than N) collection periodicity, the electronic device may identify an operation type of the interaction operation, and control a corresponding operation object based on the interaction operation. For example, if the operation type of the interaction operation is the first operation type, the operation object of the interaction operation is the operable control, when entering an (n+1)^{tn} collection periodicity, the electronic device may control the operable control based on the interaction operation obtained in the n^{th} collection periodicity. In addition, an interaction operation initiated by the user is obtained in the (n+1)^{th} collection periodicity until all interaction operations are collected. In this case, the electronic device controls the operable control in an (N+1)^{th} collection periodicity based on the interaction operation obtained in an N^{th} collection periodicity, to respond to the operable control in real time.

In S603, the target window is identified as the operation object of the interaction operation and the target window is controlled based on the interaction operation if the operation type is the second operation type.

In this embodiment, when the electronic device detects that the interaction operation does not belong to the first operation type associated with the operable control or determines that the interaction operation belongs to the second operation type associated with the target window, it indicates that the operation object corresponding to the interaction operation is the target window. Therefore, the electronic device may control the target window based on the interaction operation. For example, if the interaction operation is sliding up 50 pixels pixels, 50 pixels may be moved up for the target window. Certainly, if the interaction operation is a close operation, the target window may be closed. Therefore, a control operation on the target window is specifically determined based on actual operation content of the interaction operation. The operation content and a control effect of the operable control are not limited herein.

In this embodiment, a manner of controlling the target window based on the interaction operation is the same as a manner of controlling the operable control. For details, refer to related descriptions of S602. Details are not described herein again.

It can be learned from the foregoing that, in the window page interaction method provided in this embodiment of this application, the electronic device may identify the operation type of the interaction operation when the electronic device receives the interaction operation initiated by the user, and determine, based on the operation type, the operation object corresponding to the interaction operation. For example, the operation type of the interaction operation is the first operation type. In this case, it may be determined that the operation object corresponding to the interaction operation is the operable control, and the operable control in the target window is controlled based on the interaction operation, for example, moving in a specified direction or flipping a page. If the operation type of the interaction operation is the second operation type, it may be determined that the operation object corresponding to the interaction operation is the target window, and the target window is controlled based on the interaction operation. Compared with an existing interaction response technology, in this embodiment of this application, it can be distinguished, based on the operation type of the interaction operation, that the operation object is the target window at a bottom layer or the operable control attached to the window. Even if the operable control overlaps a display area of the target window, a corresponding operation object can also be distinguished. In addition, the corresponding operation object is controlled, thereby improving accuracy of the interaction operation and improving user use experience.

In addition, when the operation object of the interaction operation is determined in this embodiment of this application, a corresponding dedicated operation area does not need to be configured in the operable control. Instead, different operation objects may be distinguished based on the operation type of the interaction operation, and a layout of the operable control in the window page is not affected. Therefore, layout difficulty of the window page is reduced and utilization efficiency of the area in the window page is improved. Moreover, the foregoing interaction operation is not limited to being completed in a specified area, and flexibility of the interaction operation is further improved.

### Embodiment 2

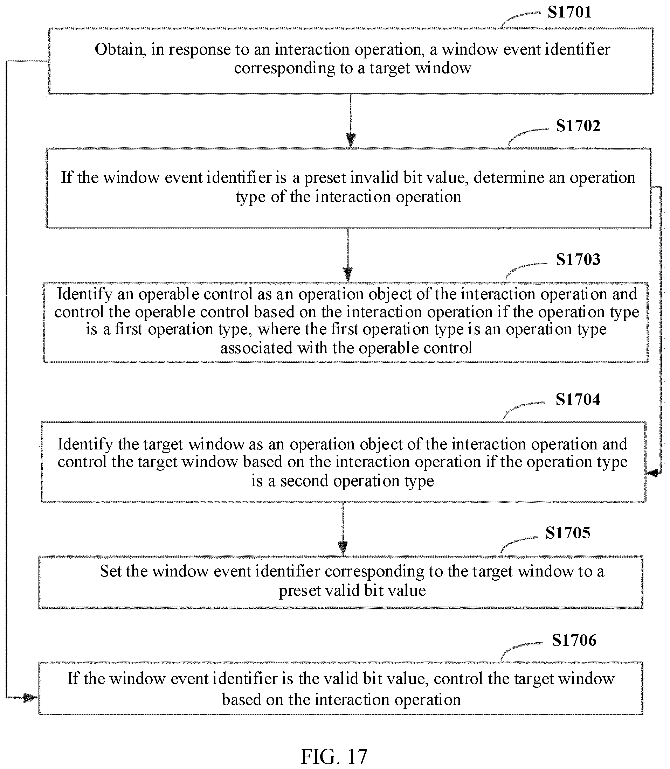

FIG. 17 is a schematic flowchart of a window page according to Embodiment 2 of this application. Refer to FIG. 17. Compared with the foregoing embodiment, a window event identifier is configured in the window page interaction method provided in Embodiment 2. A window event identifier is configured for a target window after an interaction operation whose operation object is the target window is responded to once, and a bit value of the window event identifier is identified before an operation type of the interaction operation is identified. Different response procedures are performed based on different bit values of the window event identifier. Specifically, the window page interaction method provided in Embodiment 2 of this application includes S1701 to S1706.

In S1701, the window event identifier corresponding to the target window is obtained in response to the interaction operation.

In this embodiment, after receiving an interaction operation initiated by a user, the electronic device may obtain a window event identifier of a target window displayed in a current display interface. The window event identifier is used to determine whether an operation object of a previous associated interaction operation is the target window.

In a possible implementation, when the user initiates the interaction operation, the electronic device may determine whether there is association between the interaction operation and a previous interaction operation. For example, when the user needs to drag the target window, the user may first drag leftward, and then drag upward. In other words, the foregoing two sliding operations belong to associated interaction operations. In this case, the electronic device identifies that operation objects of the interaction operations are the same.

In a possible implementation, an association time threshold may be configured for the electronic device. If the electronic device detects that a time interval between any two interaction operations falls within the association time threshold, the electronic device identifies the two interaction operations as associated interaction operations, and uses an operation object of the previous associated interaction operation as an operation object of the interaction operation. If a time interval between two interaction operations is beyond the association time threshold, the electronic device identifies that the two interaction operations are not associated interaction operations, re-obtains an operation type of the interaction operation, and determines, based on the operation type, an operation object corresponding to the interaction operation.

In a possible implementation, a plurality of collection periodicities may be configured for the electronic device, the interaction operation initiated by the user may be one continual interaction operation, and the electronic device may divide, based on the collection periodicities, the continual interaction operation initiated by the user into a plurality of associated interaction operations, and identifies operation objects of the associated interaction operations as same operation objects. In this case, if the electronic device identifies that the interaction operation of the user is interrupted, for example, a finger leaves a touchscreen or a mouse click button is released, the electronic device identifies that the continual interaction operation is completed. In this case, the window event identifier may be reset, for example, the window event identifier is set to a preset invalid bit value, so that the electronic device re-determines an operation object of the interaction operation.

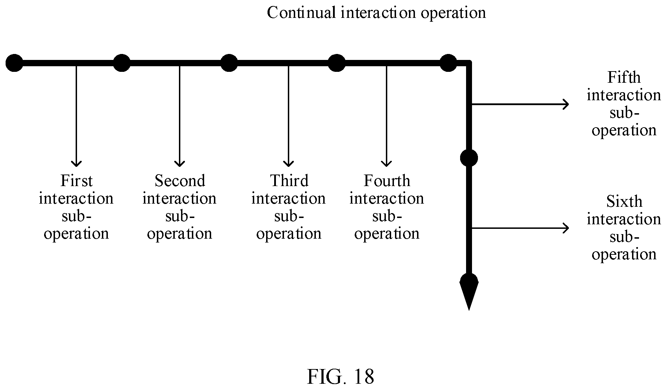

For example, FIG. 18 is a schematic diagram of division of an interaction operation according to an embodiment of this application. Refer to FIG. 18. The interaction operation is specifically a sliding operation, and a touch track is generated on a touchscreen. The electronic device may identify the foregoing continual interaction operations as a plurality of interaction operations with short duration or short movement distances based on a collection periodicity or a preset valid movement distance in a process of collecting the touch track, which are referred to as interaction sub-operations herein. That is, in a process in which the user initiates one continual interaction operation, the electronic device obtains the plurality of interaction sub-operations, and separately performs the operation in S1701 for each interaction sub-operation. The plurality of interaction sub-operations belonging to a same continual interaction operation are all identified as associated interaction operations, and the electronic device may reset the window event identifier when the continual interaction operation is completed.

In a possible implementation, the electronic device may allocate different threads to the target window and an operable control to process a corresponding operation. In this case, after receiving the interaction operation, the electronic device first gives an event for the interaction operation to a thread of the target window for processing. The thread of the target window obtains the window event identifier, and determines, based on a value of the window event identifier, whether the event continues to be processed by the thread of the target window (for example, the window event identifier is a valid bit value) or is processed by a thread of the operable control (for example, the window event identifier is an invalid bit value).

In S1702, if the window event identifier is a preset invalid bit value, the operation type of the interaction operation is determined.

In this embodiment, when the electronic device identifies that the window event identifier is the invalid bit value, it indicates that no other operation associated with the interaction operation at a previous moment controls the target window. In this case, an operation object corresponding to the interaction operation needs to be re-identified. Based on this, an operation type of the interaction operation needs to be determined, and the operation object of the interaction operation is determined based on the operation type. For specific descriptions, refer to related descriptions of S601. Details are not described herein again.

In S1703, the operable control is identified as the operation object of the interaction operation and the operable control is controlled based on the interaction operation if the operation type is a first operation type. The first operation type is an operation type associated with the operable control.

In S1704, the target window is identified as the operation object of the interaction operation and the target window is controlled based on the interaction operation if the operation type is a second operation type.

In this embodiment, because S1703 is entirely the same as S602, and S1704 is entirely the same as S603, for specific implementation processes of S1703 and S1704, refer to related descriptions of S602 and S603. Details are not described herein again.

In S1705, the window event identifier corresponding to the target window is set to a preset valid bit value.

In this embodiment, after the electronic device identifies that the operation object of the interaction operation is the target window and completes control on the target window based on the interaction operation, the electronic device may set the window event identifier corresponding to the target window to the preset valid value. After subsequently collecting another interaction operation associated with the interaction operation, the electronic device may continue to use the target window as an operation object of the another interaction operation, control the target window, and does not need to identify the operation object again, thereby maintaining continuity of the interaction operation.

In a possible implementation, after S 1705, the method further includes: If the electronic device receives no new interaction operation within preset valid time, the electronic device resets the window event identifier to the preset invalid bit value.

In a possible implementation, after S 1705, the method further includes: If identifying that the interaction operation is completed, (for example, a sliding operation ends, a finger leaves a touchscreen, or a dragging operation ends and a click button is released), the electronic device resets the window event identifier to the preset invalid bit value.

In a possible implementation, before controlling the target window based on the interaction operation, the electronic device determines whether the interaction operation is a valid operation of the target window, that is, whether the target window responds based on the interaction operation. A part of interaction operations is an invalid operation for the target window. For example, the target window is already located on a leftmost side of a screen. In this case, a left-moving operation of the target window is initiated, and the target window cannot respond based on the interaction operation. Therefore, the interaction operation is an invalid operation of the target window. Therefore, if the interaction operation is an invalid operation, the operation in S 1705 is not performed, but the window event identifier is set to the invalid bit value. If the interaction operation is a valid operation, the operation in S1705 is performed.

In S 1706, if the window event identifier is the valid bit value, the target window is controlled based on the interaction operation.

In this embodiment, when the electronic device determines that the window event identifier is the valid bit value, it indicates that a previous associated interaction operation exists for a current collected interaction operation, and an operation object of the previous associated interaction operation is the target window. In this case, an operation type of the interaction operation does not need to be determined. Instead, the target window may be controlled based on the interaction operation.

In this embodiment of this application, the window event label is configured, so that when there is the previous associated interaction operation, the type of the current collected interaction operation does not need to be identified, and the operation object of the previous interaction operation is used as the operation object of the current operation. In this way, continuity of the interaction operation is improved, a case of incorrect switching of an operation object is avoided, and operation accuracy is improved.

### Embodiment 3

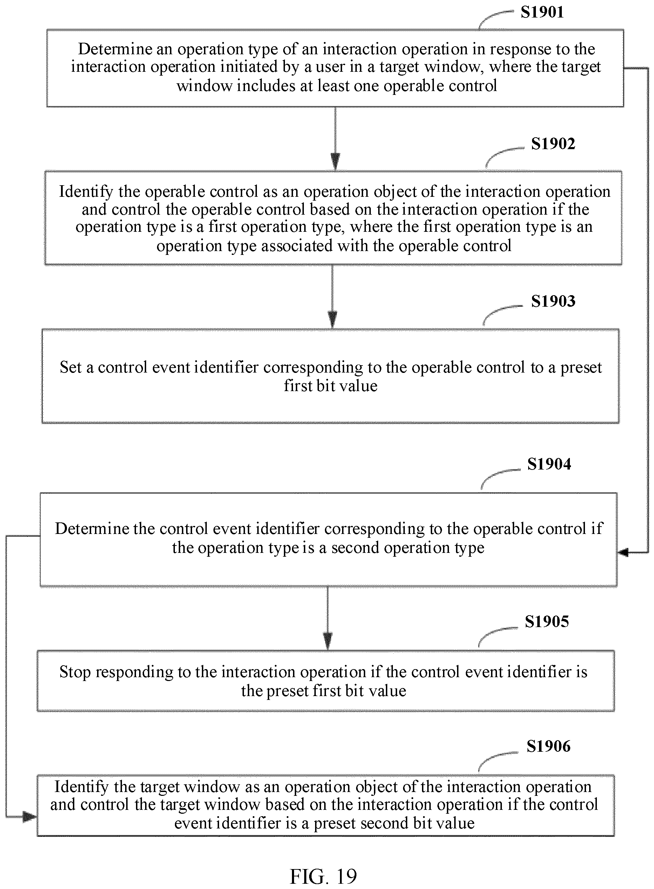

FIG. 19 is a schematic flowchart of a window page according to Embodiment 3 of this application. Refer to FIG. 19. Compared with Embodiment 1, a control event identifier is configured in the window page interaction method provided in Embodiment 3. A control event identifier is configured for an operable control after an interaction operation whose operation object is the operable control is responded to once, and a bit value of the control event identifier is identified after it is identified that the interaction operation does not belong to a first operation type of the operable control. Different response procedures are performed based on different bit values of the control event identifier. Specifically, the window page interaction method provided in Embodiment 3 of this application includes S1901 to S1906.

In S1901, an operation type of an interaction operation is determined in response to the interaction operation initiated by a user in a target window, where the target window includes at least one operable control.

In this embodiment, an implementation of S 1901 is entirely the same as an implementation of S601. For specific descriptions of S1901, refer to related descriptions of S601. Details are not described herein again.

In S1902, the operable control is identified as an operation object of the interaction operation and the operable control is controlled based on the interaction operation if the operation type is the first operation type. The first operation type is an operation type associated with the operable control.

In this embodiment, an implementation of S 1902 is entirely the same as an implementation of S602. For specific descriptions of S1902, refer to related descriptions of S602. Details are not described herein again.

In S1903, the control event identifier corresponding to the operable control is set to a preset first bit value.

In this embodiment, after an electronic device completes responding to the operable control, the electronic device may set the control event identifier of the operable control to the preset first bit value. When the control event identifier is the first bit value, it indicates that the control event identifier is in a valid state. After subsequently collecting another interaction operation associated with the interaction operation, the electronic device may continue to use the operable control as an operation object of the another interaction operation, control the operable control, and does not need to identify the operation object again, thereby maintaining continuity of the interaction operation. The control event identifier is used to determine whether an operation object of a previous associated interaction operation is the operable control.

In this embodiment, for determining whether the current collected interaction operation and the previous collected interaction operation are associated interaction operations, refer to related descriptions of S 1701. Details are not described herein again.

In a possible implementation, after S1903, the method further includes: If the electronic device receives no new interaction operation within preset valid time, the electronic device resets the control event identifier to a preset second bit value.

In a possible implementation, after S1903, the method further includes: If identifying that the interaction operation is completed, (for example, a sliding operation ends, a finger leaves a touchscreen, or a dragging operation ends and a click button is released), the electronic device resets the control event identifier to the preset second bit value.

In S 1904, the control event identifier corresponding to the operable control is determined if the operation type is a second operation type.

In this embodiment, when determining that the interaction operation belongs to the second operation type, the electronic device may obtain a value of the control event identifier, and perform different response operations based on different control event identifiers. Specifically, if the control event identifier is the first bit value, an operation in S1905 is performed. If the control event identifier is the second bit value, an operation in S1906 is performed.

In a possible implementation, if the first operation type is determined based on interactive information of the operable control, that is, the first operation type is an operation type to which the operable control can respond, and correspondingly, the second operation type is an operation type to which the operable control cannot respond, when it is determined that the collected interaction operation is an interaction operation to which the operable control cannot respond, the control event identifier of the operable control is determined.

In S 1905, responding to the interaction operation stops if the control event identifier is the preset first bit value.

In this embodiment, if the control event identifier is the preset first bit value, it indicates that there is an association relationship between the current collected interaction operation and the previous collected interaction operation, and all operation objects are operable controls. In this case, because the current collected interaction operation is an invalid interaction operation for the operable control, responding to the interaction operation directly stops.

In S1906, the target window is identified as the operation object of the interaction operation and the target window is controlled based on the interaction operation if the control event identifier is the preset second bit value.

In this embodiment, if the control event identifier is the preset second bit value, it indicates that there is no association relationship between the current collected interaction operation and the previous collected interaction operation, and the operation type of the interaction operation does not belong to the first operation type associated with the operable control. In this case, the target window may be identified as the operation object of the interaction operation, and the target window is controlled based on the interaction operation.

In a possible implementation, if the electronic device configures the corresponding window event identifier for the target window, when controlling the target window based on the interaction operation, the electronic device may set the window event identifier to a preset valid bit value, so that the target window may be identified as the operation object in a subsequent collected interaction operation.

In this embodiment of this application, the control event label is configured, so that when there is the previous associated interaction operation, the operation object of the previous interaction operation can be used as the operation object of the current operation. In this way, continuity of the interaction operation is improved, a case of incorrect switching of an operation object is avoided, and operation accuracy is improved.

### Embodiment 4

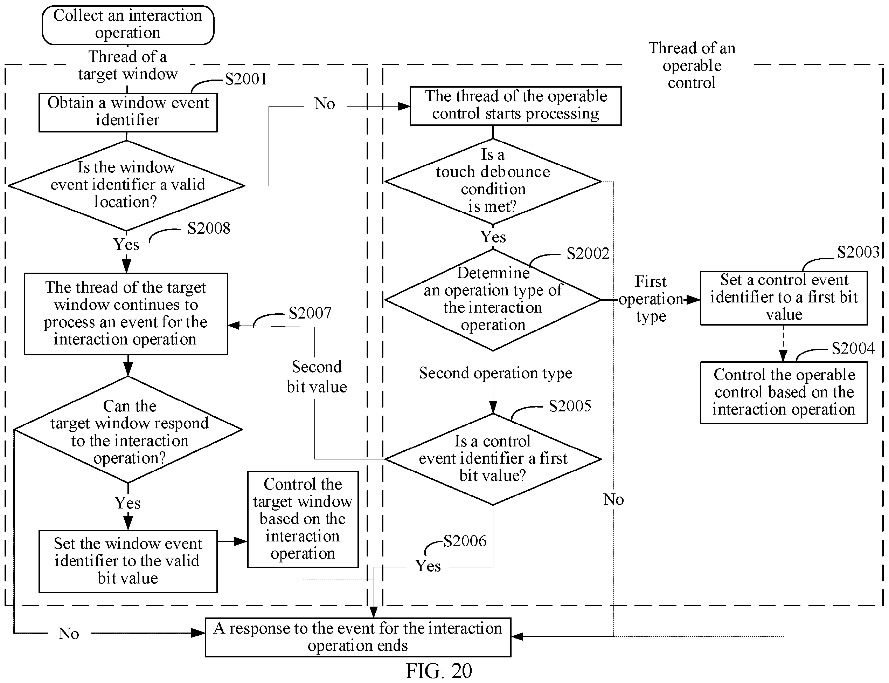

FIG. 20 is a schematic flowchart of a window page according to Embodiment 4 of this application. Refer to FIG. 20. Compared with Embodiment 1, a control event identifier and a window event identifier are configured in the window page interaction method provided in Embodiment 4. For functions of the control event identifier and the window event identifier, refer to descriptions in Embodiment 2 and Embodiment 3. Details are not described herein again. Specifically, the window page interaction method provided in Embodiment 4 of this application includes S2001 to S2008.

In S2001, the window event identifier corresponding to a target window is obtained in response to an interaction operation.

In this embodiment, an implementation of S2001 is entirely the same as an implementation of S1701. For specific descriptions of S2001, refer to related descriptions of S1701. Details are not described herein again.

In S2002, if the window event identifier is a preset invalid bit value, an operation type of the interaction operation is determined.

In this embodiment, an implementation of S2002 is entirely the same as an implementation of S1702. For specific descriptions of S2002, refer to related descriptions of S 1702. Details are not described herein again.

Further, before the operation type of the interaction operation is determined, it may be determined whether the interaction operation meets a preset touch debounce condition, that is, whether the interaction operation exceeds a preset jitter scope. If the interaction operation exceeds the preset jitter scope, the interaction operation is identified as a valid operation, and an operation of determining the operation type of the interaction operation is performed. If the interaction operation does not exceed the jitter scope, the interaction operation is identified as an invalid operation, and responding to the interaction operation stops.

In S2003, the control event identifier corresponding to an operable control is set to a preset first bit value if the operation type is a first operation type. The first operation type is an operation type associated with the operable control. The first operation type is an operation type associated with the operable control.

In this embodiment, an implementation of S2003 is entirely the same as an implementation of S1903. For specific descriptions of S2003, refer to related descriptions of S1903. Details are not described herein again.

In S2004, the operable control is identified as an operation object of the interaction operation and the operable control is controlled based on the interaction operation.

In this embodiment, an implementation of S2004 is entirely the same as an implementation of S602. For specific descriptions of S2004, refer to related descriptions of S602. Details are not described herein again.

In S2005, the control event identifier corresponding to the operable control is determined if the operation type is a second operation type.

In this embodiment, an implementation of S2005 is entirely the same as an implementation of S1904. For specific descriptions of S2005, refer to related descriptions of S1904. Details are not described herein again.

In S2006, responding to the interaction operation stops if the control event identifier is the preset first bit value.

In this embodiment, an implementation of S2006 is entirely the same as an implementation of S1905. For specific descriptions of S2006, refer to related descriptions of S1905. Details are not described herein again.

In S2007, the target window is identified as an operation object of the interaction operation and the target window is controlled based on the interaction operation if the control event identifier is a preset second bit value.

In this embodiment, an implementation of S2007 is entirely the same as an implementation of S1906. For specific descriptions of S2007, refer to related descriptions of S1906. Details are not described herein again.

Further, S2007 may include:
determining whether the target window can perform a corresponding response operation based on the interaction operation; and
if the target window can perform the corresponding response operation based on the interaction operation, setting the window event identifier corresponding to the target window to a preset valid bit value, and performing the corresponding response operation; or
if the target window cannot perform a corresponding response operation based on the interaction operation, stopping the response operation.

In S2008, if the window event identifier is the valid bit value, the target window is controlled based on the interaction operation.

In this embodiment, an implementation of S2008 is entirely the same as an implementation of S1706. For specific descriptions of S2008, refer to related descriptions of S 1706. Details are not described herein again.

Further, S2008 may include:
determining whether the target window can perform a corresponding response operation based on the interaction operation; and
if the target window can perform the corresponding response operation based on the interaction operation, setting the window event identifier corresponding to the target window to a preset valid bit value, and performing the corresponding response operation; or
if the target window cannot perform a corresponding response operation based on the interaction operation, stopping the response operation.

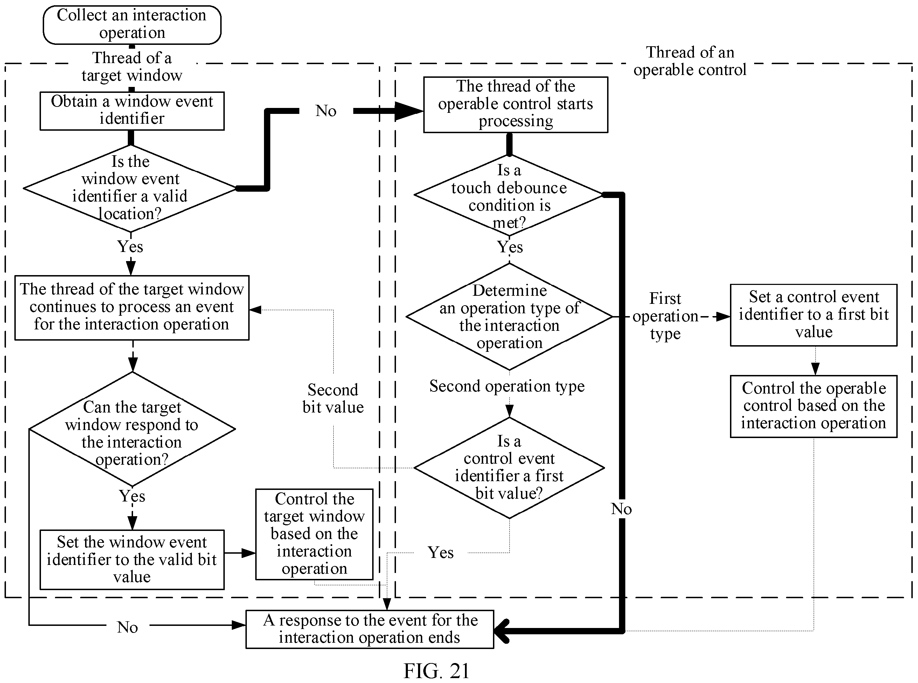

For example, FIG. 21 is a response flowchart of a window page interaction method when a touch debounce condition is not met according to an embodiment of this application. As shown in FIG. 21, the method specifically includes the following steps.
1. An electronic device receives an interaction operation, and learns that a window event identifier is an invalid bit value, the electronic device may perform touch debounce identification on the interaction operation.
2. The electronic device determines that an operation track of the interaction operation does not exceed a preset touch debounce scope, that is, the interaction operation does not meet the preset touch debounce condition.
3. To meet the preset touch debounce condition, stop responding to the foregoing interaction operation.

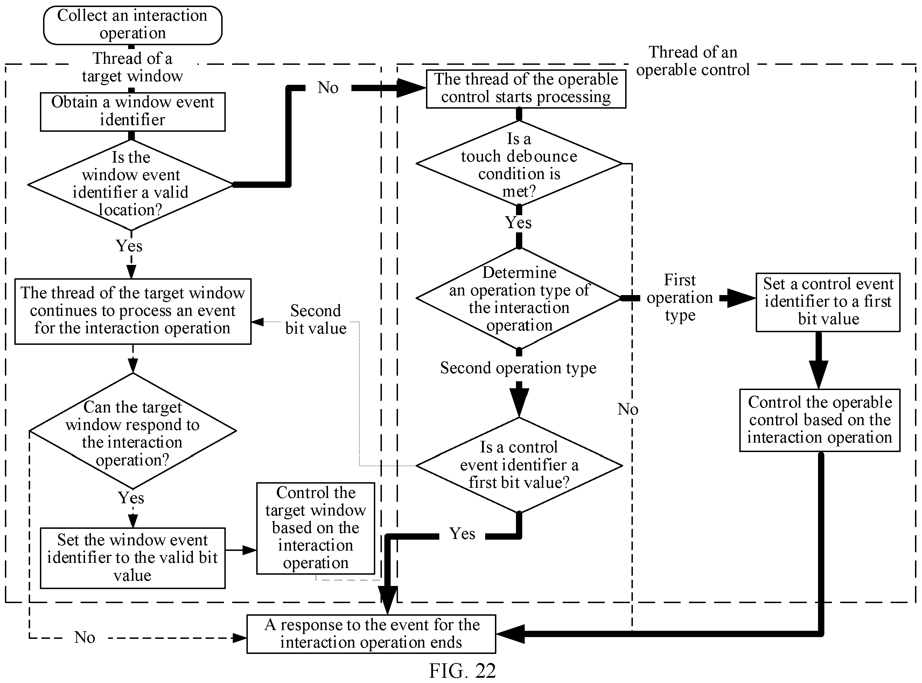

For example, FIG. 22 is a response flowchart of a window page interaction method after an interaction operation on an operable control is responded to according to an embodiment of this application, that is, a control event identifier is set to a first bit value. As shown in FIG. 22, the method specifically includes the following steps.
1. After receiving an interaction operation, an electronic device may give the interaction operation to a thread of a target window for processing. After receiving the foregoing given event, the thread of the target window may obtain a window event identifier, and determine that the window event identifier is an invalid bit value. In this case, the thread of the target window may give the foregoing event for the interaction operation to a thread of an operable control for processing, and the thread of the operable control performs touch debounce identification on the interaction operation.
2. The electronic device determines, by using the thread of the operable control, that an operation track of the interaction operation exceeds a preset touch debounce scope, that is, the interaction operation meets a preset touch debounce condition, and the thread of the operable control further determines an operation type of the interaction operation.
3. If the thread of the operable control identifies that the operation type of the interaction operation is a first operation type, the thread of the operable control may set a control event identifier as a first bit value, and control the operable control based on the interaction operation. After the control time identifier is the first bit value, all subsequent associated interaction operations received by the electronic device are processed by the thread of the operable control, and an operation object is identified as the operable control until the event for the interaction operation is completed.
4. If the operable control identifies that the operation type of the interaction operation is a second operation type, the thread of the operable control identifies a control event identifier, and does not respond to the current interaction operation when identifying the control event identifier as a first bit value.

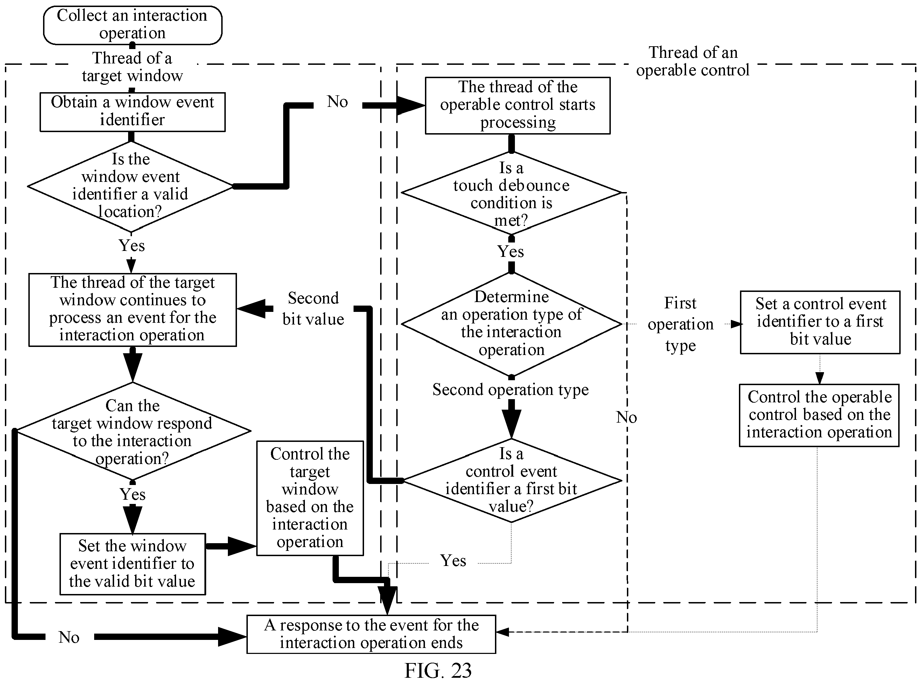

For example, FIG. 23 is a response flowchart of a window page interaction method when a target window is responded to for the first time according to an embodiment of this application, that is, a window event identifier is set to an invalid bit value, and a control event identifier is set to a second bit value. As shown in FIG. 23, the method specifically includes the following steps.
1. After receiving an interaction operation, an electronic device may give the interaction operation to a thread of a target window for processing. After receiving the foregoing given event, the thread of the target window may obtain a window event identifier, and determine that the window event identifier is an invalid bit value. In this case, the thread of the target window may give the foregoing event for the interaction operation to a thread of an operable control for processing, and the thread of the operable control performs touch debounce identification on the interaction operation.
2. The electronic device determines, by using the thread of the operable control, that an operation track of the interaction operation exceeds a preset touch debounce scope, that is, the interaction operation meets a preset touch debounce condition, and the thread of the operable control further determines an operation type of the interaction operation.
3. If the thread of the operable control identifies that the operation type of the interaction operation is a second operation type, the thread of the operable control identifies a control event identifier, and gives the event for the current interaction operation to the thread of the target window for processing when identifying the control event identifier as a second bit value.
4. The electronic device may set the window event identifier as a first bit value by using the thread of the target window, and control the target window based on the interaction operation.

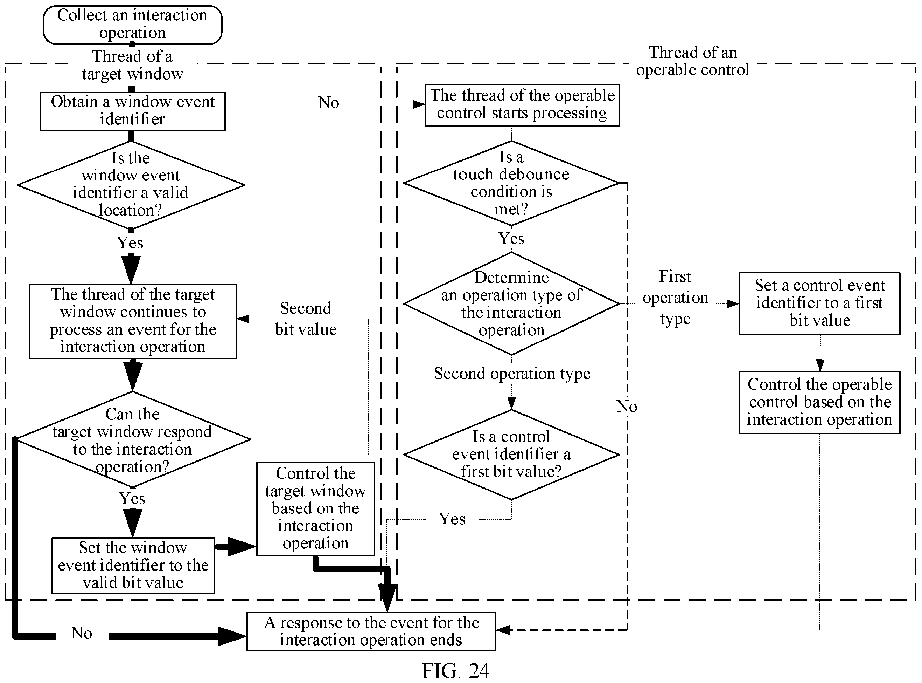

For example, FIG. 24 is a response flowchart of a window page interaction method after an interaction operation on a target window is responded to according to an embodiment of this application, that is, a window event identifier is set to a valid bit value. As shown in FIG. 24, the method specifically includes the following steps.
1. After receiving an interaction operation, an electronic device may give the interaction operation to a thread of a target window for processing. After receiving the foregoing given event, the thread of the target window may obtain a window event identifier, determine that the window event identifier is a valid bit value, and continue to perform processing by using the thread of the target window.
2. The electronic device may control the target window by using the thread of the target window until interaction time ends.

### Embodiment 5

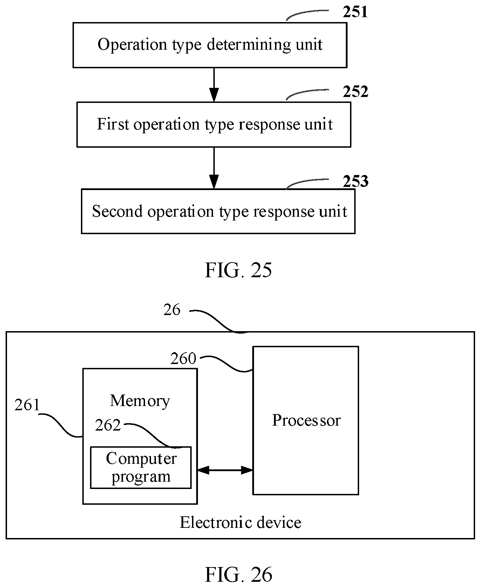

Corresponding to the window page interaction method described in the foregoing embodiment, FIG. 25 is a structural block diagram of a window page interaction apparatus according to an embodiment of this application. For ease of description, only a part related to this embodiment of this application is shown.

Refer to FIG. 25. The window page interaction apparatus includes:
an operation type determining unit 251, configured to determine an operation type of an interaction operation in response to the interaction operation initiated by a user in a target window, where the target window includes at least one operable control;
a first operation type response unit 252, configured to: identify the operable control as an operation object of the interaction operation and control the operable control based on the interaction operation if the operation type is a first operation type, where the first operation type is an operation type associated with the operable control; and
a second operation type response unit 253, configured to: identify the target window as an operation object of the interaction operation and control the target window based on the interaction operation if the operation type is a second operation type.

Optionally, the window page interaction apparatus further includes:
an interactive information determining unit, configured to determine interactive information of the operable control, where the interactive information includes an interactive scope and/or an interactive direction; and
a first operation type determining unit, configured to determine, based on the interactive information, the first operation type associated with the operable control.

Optionally, the second operation type is an operation type other than the first operation type.

Optionally, the operation type determining unit 251 includes:
a pressing duration obtaining unit, configured to identify pressing duration corresponding to the interaction operation; and
a pressing duration comparison baseline file, configured to determine the operation type of the interaction operation based on the pressing duration.

Optionally, the second operation type response unit 253 further includes:
a window event identifier setting unit, configured to set a window event identifier corresponding to the target window to a preset valid bit value.

Optionally, the operation type determining unit 251 includes:
a window event identifier obtaining unit, configured to obtain, in response to the interaction operation, the window event identifier corresponding to the target window; and
a valid bit value response unit, configured to: if the window event identifier is the valid bit value, control the target window based on the interaction operation.

Optionally, the window page interaction apparatus further includes:
an invalid bit value response unit, configured to: if the window event identifier is a preset invalid bit value, determine the operation type of the interaction operation.

Optionally, the window page interaction apparatus further includes:
a control event identifier setting unit, configured to set a control event identifier corresponding to the operable control to a preset first bit value.

Optionally, the second operation type response unit 253 includes:
a control event identifier identification unit, configured to determine the control event identifier corresponding to the operable control if the operation type is the second operation type;
a first bit value response unit, configured to stop responding to the interaction operation if the control event identifier is the preset first bit value; and
a second bit value response unit, configured to: identify the target window as the operation object of the interaction operation and control the target window based on the interaction operation if the control event identifier is a preset second bit value.

Therefore, the window page interaction apparatus provided in this embodiment of this application may also identify the operation type of the interaction operation when an electronic device receives the interaction operation initiated by the user, and determine, based on the operation type, the operation object corresponding to the interaction operation. For example, the operation type of the interaction operation is the first operation type. In this case, it may be determined that the operation object corresponding to the interaction operation is the operable control, and the operable control in the target window is controlled based on the interaction operation, for example, moving in a specified direction or flipping a page. If the operation type of the interaction operation is the second operation type, it may be determined that the operation object corresponding to the interaction operation is the target window, and the target window is controlled based on the interaction operation. Compared with an existing interaction response technology, in this embodiment of this application, it can be distinguished, based on the operation type of the interaction operation, that the operation object is the target window at a bottom layer or the operable control attached to the window. Even if the operable control overlaps a display area of the target window, a corresponding operation object can also be distinguished. In addition, the corresponding operation object is controlled, thereby improving accuracy of the interaction operation and improving user use experience.

FIG. 26 is a schematic diagram of a structure of an electronic device according to an embodiment of this application. As shown in FIG. 26, the electronic device 26 in this embodiment includes: at least one processor 260 (only one is shown in FIG. 26) processor, a memory 261, and a computer program 262 that is stored in the memory 261 and that is executable on the at least one processor 260. When executing the computer program 262, the processor 260 implements the steps in the foregoing embodiment of any window page interaction method.

The electronic device 26 may be a computing device such as a desktop computer, a notebook computer, a palmtop computer, or a cloud server. The electronic device may include but is not limited to the processor 260 and the memory 261. Persons skilled in the art may understand that FIG. 26 is merely an example of the electronic device 26, and does not constitute a limitation on the electronic device 26. The electronic device may include more or fewer components than those shown in the figure, or may combine some components, or may have different components. For example, the electronic device may further include an input/output device, a network access device, or the like.

The processor 260 may be a central processing unit (Central Processing Unit, CPU). The processor 260 may alternatively be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a discrete gate or a transistor logic device, or a discrete hardware component. The general-purpose processor may be a microprocessor, or the processor may be any conventional processor or the like.

In some embodiments, the memory 261 may be an internal storage unit of the electronic device 26, for example, a hard disk or a memory of the electronic device 26. In some other embodiments, the memory 261 may alternatively be an external storage device of the electronic device 26, for example, a plug-connected hard disk, a smart media card (Smart Media Card, SMC), a secure digital (Secure Digital, SD) card, or a flash card (Flash Card) that is disposed on the electronic device 26. Further, the memory 261 may further include both an internal storage unit of the electronic device 26 and an external storage device. The memory 261 is configured to store an operating system, an application, a boot loader (Boot Loader), data, another program, and the like, for example, program code of the computer program. The memory 261 may be further configured to temporarily store data that has been output or is to be output.

It should be noted that, content such as information exchange and execution processes between the foregoing apparatuses/units are based on a same concept as those in the method embodiments of this application. For specific functions and brought technical effects, refer to parts of the method embodiments. Details are not described herein again.

Persons skilled in the art may clearly understand that, for the purpose of convenient and brief description, division into the foregoing functional units and modules is merely used as an example for description. In an actual application, the foregoing functions may be allocated to different functional units and modules for implementation based on a requirement. In other words, an inner structure of the apparatus is divided into different functional units or modules, to implement all or some of the functions described above. Functional units and modules in embodiments may be integrated into one processing unit, or each of the units may exist alone physically, or two or more units may be integrated into one unit. The integrated unit may be implemented in a form of hardware, or may be implemented in a form of a software functional unit. In addition, specific names of the functional units and modules are merely for ease of distinguishing between the functional units and modules, but are not intended to limit the protection scope of this application. For a specific working process of the units or modules in the foregoing system, refer to a corresponding process in the method embodiments. Details are not described herein again.

An embodiment of this application further provides an electronic device. The electronic device includes: at least one processor, a memory, and a computer program that is stored in the memory and that is executable on the at least one processor. When executing the computer program, the processor implements the steps in any one of the foregoing method embodiments.

An embodiment of this application further provides a computer-readable storage medium. The computer-readable storage medium stores a computer program. When the computer program is executed by a processor, the steps in the foregoing method embodiments can be implemented.

An embodiment of this application provides a computer program product. When the computer program product runs on a mobile terminal, the steps in the foregoing method embodiments can be implemented by the mobile terminal.

When the integrated unit is implemented in the form of the software functional unit and sold or used as an independent product, the integrated unit may be stored in a computer-readable storage medium. Based on such an understanding, in this application, all or some of the procedures of the methods in the foregoing embodiments may be implemented by a computer program instructing related hardware. The computer program may be stored in a computer-readable storage medium. When the computer program is executed by a processor, the steps in the method embodiments can be implemented. The computer program includes computer program code. The computer program code may be in a source code form, an object code form, an executable file form, some intermediate forms, or the like. The computer-readable medium may include at least any entity or apparatus that can carry the computer program code to a photographing apparatus/an electronic device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be an electrical carrier signal or a telecommunication signal according to legislation and patent practices.

In the foregoing embodiments, descriptions of all embodiments have respective focuses. For a part that is not described in detail in an embodiment, refer to related descriptions in another embodiment.

Persons of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. Persons skilled in the art may use different methods to implement the described functions of each particular application, but it should not be considered that the implementation goes beyond the scope of this application.

In embodiments provided in this application, it should be understood that the disclosed apparatus/network device and method may be implemented in other manners. For example, the described apparatus/network device embodiment is merely an example. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

The foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application, and these modifications and replacements shall fall within the protection scope of this application.

## Claims

1. A window page interaction method, comprising:
determining an operation type of an interaction operation in response to the interaction operation initiated by a user in a target window, wherein the target window comprises at least one operable control; and
identifying the operable control as an operation object of the interaction operation and controlling the operable control based on the interaction operation if the operation type is a first operation type, wherein the first operation type is an operation type associated with the operable control; or
identifying the target window as an operation object of the interaction operation and controlling the target window based on the interaction operation if the operation type is a second operation type.

2. The interaction method according to claim 1, wherein before the determining an operation type of an interaction operation in response to the interaction operation initiated by a user in a target window, the method further comprises:
determining interactive information of the operable control, wherein the interactive information comprises an interactive scope and/or an interactive direction; and
determining, based on the interactive information, the first operation type associated with the operable control.

3. The interaction method according to claim 2, wherein the second operation type is an operation type other than the first operation type.

4. The interaction method according to claim 1, wherein the determining an operation type of an interaction operation in response to the interaction operation initiated by a user in a target window comprises:
identifying pressing duration corresponding to the interaction operation; and
determining the operation type of the interaction operation based on the pressing duration.

5. The interaction method according to claim 1, wherein the identifying the target window as an operation object of the interaction operation and controlling the target window based on the interaction operation if the operation type is a second operation type further comprises:
setting a window event identifier corresponding to the target window to a preset valid bit value.

6. The interaction method according to claim 5, wherein the determining an operation type of an interaction operation in response to the interaction operation initiated by a user in a target window comprises:
obtaining, in response to the interaction operation, the window event identifier corresponding to the target window; and
if the window event identifier is the valid bit value, controlling the target window based on the interaction operation.

7. The interaction method according to claim 6, wherein after the obtaining, in response to the interaction operation, the window event identifier corresponding to the target window, the method further comprises:
if the window event identifier is a preset invalid bit value, determining the operation type of the interaction operation.

8. The interaction method according to any one of claims 1 to 7, wherein after the identifying the operable control as an operation object of the interaction operation and controlling the operable control based on the interaction operation if the operation type is a first operation type, the method further comprises:
setting a control event identifier corresponding to the operable control to a preset first bit value.

9. The interaction method according to claim 8, wherein the identifying the target window as an operation object of the interaction operation and controlling the target window based on the interaction operation if the operation type is a second operation type comprises:
determining the control event identifier corresponding to the operable control if the operation type is the second operation type; and
stopping responding to the interaction operation if the control event identifier is the preset first bit value; or
identifying the target window as the operation object of the interaction operation and controlling the target window based on the interaction operation if the control event identifier is a preset second bit value.

10. A window page interaction apparatus, comprising:
an operation type determining unit, configured to determine an operation type of an interaction operation in response to the interaction operation initiated by a user in a target window, wherein the target window comprises at least one operable control;
a first operation type response unit, configured to: identify the operable control as an operation object of the interaction operation and control the operable control based on the interaction operation if the operation type is a first operation type, wherein the first operation type is an operation type associated with the operable control; and
a second operation type response unit, configured to: identify the target window as an operation object of the interaction operation and control the target window based on the interaction operation if the operation type is a second operation type.

11. An electronic device, comprising a memory, a processor, and a computer program that is stored in the memory and that is executable on the processor, wherein the processor implements the method according to any one of claims 1 to 9 when executing the computer program.

12. A computer-readable storage medium, wherein the computer-readable storage medium stores a computer program, and when the computer program is executed by the processor, the method according to any one of claims 1 to 9 is implemented.
